(19) **Europäisches Patentamt** / **European Patent Office** / **Office européen des brevets**

(11) **EP 4 786 418 A1**

(12) **EUROPEAN PATENT APPLICATION**
published in accordance with Art. 153(4) EPC

(43) Date of publication:
**05.08.2026 Bulletin 2026/32**

(21) Application number: **24872462.7**

(22) Date of filing: **26.09.2024**

(51) International Patent Classification (IPC):
$C01G\ 41/00^{(2006.01)}$   $C09C\ 1/00^{(2006.01)}$
$C09D\ 17/00^{(2006.01)}$   $C09K\ 3/00^{(2006.01)}$

(52) Cooperative Patent Classification (CPC):
**C01G 41/00; C09C 1/00; C09D 17/00; C09K 3/00**

(86) International application number:
**PCT/JP2024/034548**

(87) International publication number:
**WO 2025/070678 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170833**

(71) Applicant: **SUMITOMO METAL MINING CO., LTD.**
**Tokyo**
**105-8716 (JP)**

(72) Inventors:
• **NAKAKURA, Shuhei**
  **Chiba 272-8588 (JP)**
• **MACHIDA, Keisuke**
  **Chiba 272-8588 (JP)**

(74) Representative: **Watermeyer, Nicholas**
**Withers & Rogers LLP**
**2 London Bridge**
**London SE1 9RA (GB)**

(54) **COMPLEX TUNGSTEN OXIDE PARTICLES, NEAR-INFRARED RAY ABSORBING PARTICLE DISPERSION LIQUID, AND NEAR-INFRARED RAY ABSORBING PARTICLE DISPERSION**

(57)    Complex tungsten oxide particles include complex tungsten oxide, in which the complex tungsten oxide is represented by a general formula $M_xW_yO_z$ ($0.20 \leq x/y \leq 0.37$; and $2.2 \leq z/y \leq 3.3$), a crystal system of the complex tungsten oxide particles is hexagonal, and in a molar extinction coefficient curve measured in a range of 0.5 eV to 2.0 eV for a dispersion liquid in which the complex tungsten oxide particles are dispersed in a liquid medium or for a dispersion in which the complex tungsten oxide particles are dispersed in a solid medium, a peak value of an absorption curve of polaron absorption is lower than a peak value of an absorption curve of localized surface plasmon absorption in an orientation parallel to a c-axis of complex tungsten oxide crystals contained in the complex tungsten oxide particles.

EP 4 786 418 A1

**Description**

TECHNICAL FIELD

The present invention relates to complex tungsten oxide particles, a near-infrared ray absorbing particle dispersion liquid, and a near-infrared ray absorbing particle dispersion.

BACKGROUND ART

Various technologies have heretofore been proposed as near-infrared ray shielding technologies that have good visible light transmittance and reduce solar radiation transmittance while maintaining transparency. Among them, near-infrared ray shielding technologies using conductive fine particles, which are inorganic substances, have advantages such as excellent near-infrared ray shielding properties, low cost, radio-wave transmittance, and high weather resistance, as compared with other technologies.

For example, Patent Document 1 discloses technologies relating to an infrared ray shielding material fine particle dispersion in which complex tungsten oxide fine particles represented by the general formula $M_xW_yO_z$ (where M is one or more elements selected from H, He, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.001 \leq x/y \leq 1$; and $2.2 \leq z/y \leq 3.0$) are dispersed as infrared ray shielding material fine particles in a medium such as a resin, a method for producing the infrared ray shielding material fine particles, and the like. Patent Document 1 also discloses an example of producing an infrared ray shielding film, which is a thin infrared ray shielding material fine particle dispersion film.

According to Patent Document 1, it is stated that it is possible to produce an infrared ray shielding material fine particle dispersion having excellent optical properties, such as more efficiently shielding sunlight, particularly light in the near-infrared ray region, while simultaneously maintaining transmittance in the visible light region. Accordingly, application of the infrared ray shielding particle dispersion disclosed in Patent Document 1 to various applications, such as window glass, has been studied.

Various studies have been also conducted on methods for producing complex tungsten oxide particles useful as near-infrared ray shielding materials.

For example, in Non-Patent Document 1, the inventor of Patent Document 1 proposes a method for synthesizing $Cs_{0.32}WO_3$ nanoparticles by a solid-phase method. However, in the synthesis method disclosed in Non-Patent Document 1, the particle diameter is large, and thus a pulverization process is required to achieve nanoparticle formation. As a result, there is a possibility that the number of process steps may increase.

Patent Document 2 proposes synthesizing potassium-cesium tungsten bronze solid-solution particles using a plasma torch under a reducing atmosphere.

Non-Patent Document 2 discloses a method for synthesizing $Cs_xWO_3$ by a hydrothermal synthesis method. However, the hydrothermal synthesis method requires a synthesis time of several tens of hours or more. In addition, the hydrothermal synthesis method has a disadvantage in that the number of process steps, such as post-treatment steps, is large.

Non-Patent Document 3 discloses a synthesis method based on an inductively coupled thermal plasma technology. However, such a synthesis method requires introduction of an inductively coupled thermal plasma apparatus, resulting in high initial introduction costs as well as high running costs.

Non-Patent Document 4 discloses a method for synthesizing a complex tungsten oxide by a water-solvent flame spray pyrolysis method. However, the infrared ray absorption properties were low because the amount of Cs was small.

Non-Patent Document 5 discloses a method for synthesizing a complex tungsten oxide by a water-solvent spray pyrolysis method, and also discloses a method for synthesizing a complex tungsten oxide with a small amount of Cs desorption from the particle surface. However, the infrared ray absorption properties were low.

Patent Documents 3 and 4 disclose methods for producing complex tungsten fine particles by a flame spray method.

Patent Documents 3 and 4 disclose methods for producing complex tungsten fine particles by a flame spray method.

CITATION LIST

PATENT LITERATURE

# EP 4 786 418 A1

Patent Document 1: International Publication No. WO 2005/037932
Patent Document 2: Japanese National Publication of International Application No. 2012-532822
Patent Document 3: International Publication No. WO 2017/129516
Patent Document 4: U.S. Patent Application Publication No. 2010/0102700

NON-PATENT LITERATURE

Non-Patent Document 1: Takeda Hiromitsu, and Kenji Adachi, "Near infrared absorption of tungsten oxide nanoparticle dispersions." Journal of the American Ceramic Society, 2007, Vol. 90, Issue 12, P. 4059-4061.

Non-Patent Document 2: Guo Chongshen, et al., "Novel synthesis of homogenous CsxWO3 nanorods with excellent NIR shielding properties by a water controlled-release solvothermal process." Journal of Materials Chemistry, 2010, Vol. 20, Issue 38, P. 8227-8229.

Non-Patent Document 3: Mamak Marc, et al., "Thermal plasma synthesis of tungsten bronze nanoparticles for near infra-red absorption applications." Journal of Materials Chemistry, 2010, Vol. 20, Issue 44, P. 9855-9857.

Non-Patent Document 4: Hirano Tomoyuki, et al. "Synthesis of highly crystalline hexagonal cesium tungsten bronze nanoparticles by flame-assisted spray pyrolysis." Advanced Powder Technology, 2018, Vol. 29, Issue 10, P. 2512-2520.

Non-Patent Document 5: Nakakura Shuhei, et al. "Improved photochromic stability in less deficient cesium tungsten bronze nanoparticles." Advanced Powder Technology, 2020, Vol. 31, Issue 2, P. 702-707.

Non-Patent Document 6: Machida K., Okada M, Adachi K. "Excitations of free and localized electrons at nearby energies in reduced cesium tungsten bronze nanocrystals. " J. Appl. Phys, 2019, Vol. 125, Issue 10, P. 103103.

## SUMMARY OF THE INVENTION

## PROBLEM TO BE SOLVED BY THE INVENTION

As described above, complex tungsten oxide particles are useful as near-infrared ray shielding materials. However, there is a demand for a material that is superior in visible light transmittance and has improved near-infrared ray shielding properties as compared with complex tungsten oxide particles known in the related art.

Therefore, an object of an aspect of the present invention is to provide complex tungsten oxide particles that are excellent in visible light transmittance and near-infrared ray shielding properties.

## MEANS FOR SOLVING THE PROBLEM

According to an aspect of the present invention, complex tungsten oxide particles including complex tungsten oxide are provided, in which

the complex tungsten oxide is represented by a general formula $M_xW_yO_z$, where an element M is one or more elements selected from an alkali metal element, an alkaline earth metal element, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.20 \leq x/y \leq 0.37$; and $2.2 \leq z/y \leq 3.3$,
a crystal system of the complex tungsten oxide particles is hexagonal, and
in a molar extinction coefficient curve measured in a range of 0.5 eV to 2.0 eV for a dispersion liquid in which the complex tungsten oxide particles are dispersed in a liquid medium or for a dispersion in which the complex tungsten oxide particles are dispersed in a solid medium, a peak value of an absorption curve of polaron absorption is lower than a peak value of an absorption curve of localized surface plasmon absorption in an orientation parallel to a c-axis of complex tungsten oxide crystals contained in the complex tungsten oxide particles.

## ADVANTAGEOUS EFFECTS OF THE INVENTION

According to an aspect of the present invention, it is possible to provide complex tungsten oxide particles that are excellent in visible light transmittance and near-infrared ray shielding properties.

## BRIEF DESCRIPTION OF THE DRAWINGS

[FIG. 1] FIG. 1 is a schematic diagram of a complex material producing apparatus which can be suitably used in a method for producing complex tungsten oxide particles according to a present embodiment.

[FIG. 2] FIG. 2 is an explanatory diagram of a reduction apparatus used in a reduction step.

[FIG. 3] FIG. 3 is a schematic view of a near-infrared ray absorbing particle dispersion liquid.

[FIG. 4] FIG. 4 is a schematic view of a near-infrared ray absorbing particle dispersion.

[FIG. 5] FIG. 5 is a schematic view of a near-infrared ray absorbing laminate.

[FIG. 6] FIG. 6 is a schematic diagram illustrated of a near-infrared ray absorbing transparent substrate.

[FIG. 7A] FIG. 7A is a transmission electron microscopy (TEM) image of complex tungsten oxide particles after a heating step in Example 1.

[FIG. 7B] FIG. 7B is a particle size distribution of the complex tungsten oxide particles after the heating step in Example 1.

[FIG. 7C] FIG. 7C is a TEM image of complex tungsten oxide particles after a reduction step in Example 1.

[FIG. 7D] FIG. 7D is a particle size distribution of the complex tungsten oxide particles after the reduction step in Example 1.

[FIG. 8] FIG. 8 is an X-ray diffraction (XRD) pattern of the complex tungsten oxide particles obtained in Example 1.

[FIG. 9A] FIG. 9A is a transmitted light profile of a near-infrared ray absorbing particle dispersion liquid obtained in Example 1.

[FIG. 9B] FIG. 9B is a transmitted light profile of a near-infrared ray absorbing particle dispersion liquid obtained in Comparative Example 1.

[FIG. 10A] FIG. 10A illustrates a molar extinction coefficient curve obtained in Example 1, absorption curves of three absorption components separated from the molar extinction coefficient curve, and a combined curve thereof.

[FIG. 10B] FIG. 10B illustrates a molar extinction coefficient curve obtained in Comparative Example 1, absorption curves of three absorption components separated from the molar extinction coefficient curve, and a combined curve thereof.

[FIG. 11] FIG. 11 is an optical transmittance profile of dispersion liquids containing complex tungsten oxide particles obtained in Example 1 and Comparative Example 1.

DESCRIPTION OF THE EMBODIMENTS

Specific examples of complex tungsten oxide particles, a near-infrared ray absorbing particle dispersion liquid, and a near-infrared ray absorbing particle dispersion according to an embodiment of the present disclosure (hereinafter referred to as "the present embodiment") will be described below with reference to the drawings. It should be noted that the present invention is not limited to these examples, but is defined by the claims, and all modifications within the scope and meaning equivalent to the claims are intended to be encompassed.

[Complex Tungsten Oxide Particles]

The complex tungsten oxide particles of the present embodiment include a complex tungsten oxide. It should be noted that the complex tungsten oxide particles may be composed of complex tungsten oxide, and even in such a case, the inclusion of unavoidable impurities is not excluded.

The complex tungsten oxide is represented by the general formula $M_xW_yO_z$.

The element M in the above general formula may be one or more elements selected from an alkali metal element, an alkaline earth metal element, a rare earth element, Mg (magnesium), Zr (zirconium), Cr (chromium), Mn (manganese), Fe (iron), Ru (ruthenium), Co (cobalt), Rh (rhodium), Ir (iridium), Ni (nickel), Pd (palladium), Pt (platinum), Cu (copper), Ag (silver), Au (gold), Zn (zinc), Cd (cadmium), Al (aluminum), Ga (gallium), In (indium), Tl (thallium), Si (silicon), Ge (germanium), Sn (tin), Pb (lead), Sb (antimony), B (boron), F (fluorine), P (phosphorus), S (sulfur), Se (selenium), Br (bromine), Te (tellurium), Ti (titanium), Nb (niobium), V (vanadium), Mo (molybdenum), Ta (tantalum), Re (rhenium), Be (beryllium), Hf (hafnium), Os (osmium), Bi (bismuth), and I (iodine). W represents tungsten. O represents oxygen. x, y, and z preferably satisfy $0.20 \leq x/y \leq 0.37$ and $2.2 \leq z/y \leq 3.3$.

Examples of the alkali metal element include Li (lithium), Na (sodium), K (potassium), Rb (rubidium), Cs (cesium), and Fr (francium). Examples of the alkaline earth metal element include Ca (calcium), Sr (strontium), Ba (barium), and Ra (radium). Examples of the rare earth element include Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium).

The crystal system of the complex tungsten oxide is hexagonal.

The complex tungsten oxide particles exhibit, in a molar extinction coefficient curve measured in a range of 0.5 eV to 2.0 eV for a dispersion liquid in which the complex tungsten oxide particles are dispersed in a liquid medium or for a dispersion in which the complex tungsten oxide particles are dispersed in a solid medium, a lower peak value of an absorption curve of polaron absorption than a peak value of an absorption curve of localized surface plasmon absorption in an orientation parallel to a c-axis of complex tungsten oxide crystals contained in the complex tungsten oxide particles.

Hereinafter, the complex tungsten oxide particles of the present embodiment will be described.

(1) Composition

The complex tungsten oxide contained in the complex tungsten oxide particles is represented by the general formula $M_xW_yO_z$ as described above. Since the element M, W, O, and x, y, and z in the formula have already been described, a description thereof is omitted here.

The complex tungsten oxide can have one or more tungsten bronze-type crystal structures selected from, for example, tetragonal, cubic, and hexagonal. The complex tungsten oxide contained in the complex tungsten oxide particles of the present embodiment is hexagonal.

When the complex tungsten oxide has a hexagonal crystal structure, transmission of light in the visible light region through the particles is improved, and absorption of light in the near-infrared region of the particles is improved.

The complex tungsten oxide also functions as a near-infrared ray shielding material even when the complex tungsten oxide has a tetragonal or cubic tungsten bronze-type crystal structure. However, the absorption position of light in the near-infrared region tends to vary depending on the crystal structure of the complex tungsten oxide. Specifically, the absorption position of light in the near-infrared region tends to shift toward a longer wavelength in the case of a tetragonal crystal as compared with a cubic crystal, and further shifts toward a longer wavelength in the case of a hexagonal crystal as compared with a tetragonal crystal. Accompanying such variation in the absorption position, absorption of light in the visible light region is smallest in the case of the hexagonal crystal, followed by the tetragonal crystal, while the cubic crystal exhibits the largest absorption of light in the visible light region among these. Therefore, for applications with higher transmission of light in the visible light region and greater shielding of light in the near-infrared region, it is preferable to use a complex tungsten oxide having a hexagonal tungsten bronze-type crystal structure.

As described above, when the complex tungsten oxide has a hexagonal crystal structure, transmittance of light in the visible light region and absorption of light in the near-infrared region of the complex tungsten oxide particles are particularly improved. Therefore, the complex tungsten oxide particles preferably contain a complex tungsten oxide having a hexagonal crystal structure. When one or more elements selected from Cs, Rb, K, Tl, Ba, and In are used as the element M, formation of a hexagonal crystal structure is facilitated. Accordingly, the element M preferably contains one or more elements selected from Cs, Rb, K, Tl, Ba, and In, and more preferably contains one or more elements selected from Rb and Cs.

Hereinafter, the arrangement of the element M in the case where the complex tungsten oxide has a hexagonal crystal structure will be described.

Octahedra each formed by one W (tungsten) atom and six O (oxygen) atoms, that is, octahedra having O atoms at the vertices and a W atom at the center, are assembled such that six octahedra collectively form a hexagonal void (tunnel) composed of O atoms. The element M is arranged in the void to constitute one unit, and a large number of such units are assembled to constitute a hexagonal crystal structure.

When the complex tungsten oxide having a hexagonal crystal structure has a uniform crystal structure, an amount-of-substance ratio of the element M to W is $0.20 \leq x/y \leq 0.37$, preferably $0.25 \leq x/y \leq 0.37$, and more preferably $0.30 \leq x/y \leq 0.36$. Theoretically, when $z/y = 3$, the value of x/y is 0.33, at which the element M is considered to be arranged in all of the hexagonal voids. Note that x, y, and z represent x, y, and z in the above-described general formula $M_xW_yO_z$, and the same applies hereinafter.

The complex tungsten oxide has a composition in which the element M is added to tungsten trioxide ($WO_3$). Since tungsten trioxide does not contain effective free electrons, a near-infrared ray absorption effect cannot be exhibited unless the ratio of oxygen to one mole of tungsten is less than 3. However, in the complex tungsten oxide, free electrons are generated by addition of the element M, thereby enabling a near-infrared ray absorption effect. Accordingly, the ratio of oxygen to one mole of tungsten can be 3 or less. Further, the ratio of oxygen to one mole of tungsten may exceed 3. However, a $WO_2$ crystalline phase may cause absorption and scattering of light in the visible light region and may reduce absorption of light in the near-infrared region. Therefore, from the viewpoint of suppressing formation of $WO_2$, the ratio of oxygen to one mole of tungsten is preferably greater than 2.

Therefore, z/y, which is the ratio of oxygen to one mole of tungsten, preferably satisfies $2.2 \leq z/y \leq 3.3$ as described above.

(2) Average Particle Diameter

When the complex tungsten oxide particles of the present embodiment are used, for example, in applications in which transparency is to be retained, it is preferable that the complex tungsten oxide particles have an average particle diameter of 800 nm or less. This is because particles having an average particle diameter of 800 nm or less do not completely shield light due to scattering, thereby retaining high visibility of light in the visible light region while efficiently retaining transparency. In particular, when emphasis is placed on transparency of light in the visible light region, it is preferable to further take scattering of light in the visible light region by the particles into consideration.

When emphasis is placed on reducing scattering of light in the visible light region by the particles, the average particle diameter is preferably 200 nm or less, and more preferably 100 nm or less.

When the average particle diameter of the complex tungsten oxide particles is small, scattering of light in the visible light region due to geometric scattering or Mie scattering is reduced. As a result, particularly high transparency can be obtained in a near-infrared ray shielding film such as a near-infrared ray absorbing particle dispersion. When the average particle diameter is 200 nm or less, geometric scattering or Mie scattering is reduced, and the scattering regime shifts to a Rayleigh scattering regime. In the Rayleigh scattering regime, the intensity of scattered light decreases in proportion to the sixth power of the average particle diameter. Therefore, as the average particle diameter decreases, scattering of light in the visible light region is reduced, thereby improving transparency. Further, when the average particle diameter is 100 nm or less, scattered light becomes extremely small, which is preferable. From the viewpoint of avoiding scattering of light in the visible light region, a smaller average particle diameter is preferable.

Therefore, the complex tungsten oxide particles of the present embodiment preferably have an average particle diameter of 800 nm or less, more preferably 200 nm or less, and still more preferably 100 nm or less, for example, to retain high visibility in the visible light region as described above. The lower limit of the average particle diameter of the complex tungsten oxide particles of the present embodiment is not particularly limited, but is preferably 1 nm or more, more preferably 5 nm or more, and still more preferably 10 nm or more.

Therefore, the average particle diameter of the complex tungsten oxide particles of the present embodiment is preferably from 1 nm to 800 nm, more preferably from 5 nm to 200 nm, still more preferably from 10 nm to 200 nm, and most preferably from 10 nm to 100 nm.

The average particle diameter of the complex tungsten oxide particles is calculated by measuring the particle diameter of each complex tungsten oxide particle from a transmission electron microscope image. Specifically, three fields of view are selected at a magnification such that each field of view includes 200 or more complex tungsten oxide particles. In each field of view, images of the complex tungsten oxide particles are binarized, and the average particle diameter is calculated by image analysis. The upper limit of the number of complex tungsten oxide particles in one field of view is not particularly limited. However, the magnification may be selected so as to include, for example, 500 or fewer complex tungsten oxide particles in one field of view. In addition, all complex tungsten oxide particles in the three fields of view may be subjected to evaluation, or, for example, 500 to 800 particles in total from the three fields of view may be selected, or 600 to 700 particles may be selected.

Specifically, a circle-equivalent diameter is calculated from the area of each complex tungsten oxide particle and is defined as the particle diameter of the complex tungsten oxide particles. The average particle diameter is calculated by summing the particle diameters of all complex tungsten oxide particles subjected to evaluation and dividing the sum by the number of the evaluated particles. In other words, the average particle diameter can be defined as the arithmetic mean of particle diameters of the complex tungsten oxide particles evaluated.

(3) Peak Separation and Integrated Intensity of Localized Surface Plasmon Absorption and Polaron Absorption of Complex Tungsten Oxide Particles

The complex tungsten oxide particles of the present embodiment can be formed into a near-infrared ray absorbing particle dispersion liquid by being dispersed in a liquid medium. The complex tungsten oxide particles of the present embodiment can also be formed into a near-infrared ray absorbing particle dispersion by being dispersed in a solid medium.

The complex tungsten oxide particles of the present embodiment contained in the near-infrared ray absorbing particle dispersion liquid or the near-infrared ray absorbing particle dispersion can have a nanoscale particle size and absorb infrared rays, particularly near-infrared rays.

As will be described later, the complex tungsten oxide particles of the present embodiment are preferably produced by a production method capable of directly synthesizing complex tungsten oxide particles having a small particle diameter, for example, a particle diameter of 1 $\mu$m or less.

By using complex tungsten oxide particles produced by a production method capable of directly synthesizing complex tungsten oxide particles having a small particle diameter, damage to the complex tungsten oxide particles during pulverization and dispersion in the preparation of a dispersion liquid or the like can be suppressed. Specifically, compared with a case in which complex tungsten oxide particles having a particle diameter exceeding 1 $\mu$m are synthesized by a solid-phase method or the like known in the related art and then pulverized and dispersed to prepare a dispersion liquid or the like, the occurrence of damage such as lattice defects during pulverization and dispersion of the complex tungsten oxide particles can be suppressed.

During pulverization and dispersion of complex tungsten oxide particles, desorption of constituent elements or distortion of the crystal lattice may occur. In such cases, the electronic structure of the complex tungsten oxide particles changes, which affects the plasma frequency constituting the localized surface plasmon resonance of the particles. The complex tungsten oxide particles of the present embodiment have a plasma frequency constituting the localized surface plasmon resonance that exhibits predetermined characteristics.

Accordingly, the complex tungsten oxide particles of the present embodiment can serve as near-infrared ray absorbing particles that are excellent in visible light transmittance and near-infrared ray shielding properties.

The complex tungsten oxide particles of the present embodiment can be formed into a dispersion liquid in which the particles are dispersed in a liquid medium, or into a dispersion in which the particles are dispersed in a solid medium. The dispersion liquid or the dispersion exhibits an excellent infrared ray shielding effect, in which a bottom transmittance in a near-infrared region can be reduced to 5% or less even when a peak transmittance is set to 75% or more in a wavelength region from 500 nm to 600 nm. Furthermore, the dispersion liquid or the dispersion using the complex tungsten oxide particles of the present embodiment can transmit red light having a wavelength of around 800 nm, as compared with, for example, a dispersion liquid of complex tungsten oxide particles shown in Comparative Example 1. Accordingly, the dispersion liquid or the dispersion using the complex tungsten oxide particles can contribute to improvement of color tone. Specifically, for example, a transmittance of 50% or more at a wavelength of 700 nm and a transmittance of 30% or more at a wavelength of 800 nm can be achieved. At the same time, rapid absorption of infrared rays having a wavelength of around 1,000 nm is also observed in the dispersion liquid or the dispersion. Therefore, by using the complex tungsten oxide particles of the present embodiment, it is possible to obtain a dispersion liquid or a dispersion capable of suppressing solar radiation transmittance while providing a more neutral transmitted color tone and ensuring transmittance at sensor wavelengths.

Hereinafter, a molar extinction coefficient curve obtained from an absorption curve measured by a spectrophotometer for a dispersion liquid in which the complex tungsten oxide particles of the present embodiment are dispersed in a liquid medium, or for a dispersion in which the particles are dispersed in a solid medium, will be examined.

The absorption observed in the absorption curve is caused by localized surface plasmon absorption and polaron absorption of the complex tungsten oxide crystal contained in the complex tungsten oxide particles. The combination of these absorptions results in the absorption curve.

In the case of the complex tungsten oxide particles, localized surface plasmon absorption exhibits anisotropy with respect to a c-axis of a complex tungsten oxide crystal. Specifically, in the case of the complex tungsten oxide particles, the localized surface plasmon absorption includes absorption due to localized surface plasmon resonance in an orientation perpendicular to the c-axis (LSPR⊥) and absorption due to localized surface plasmon resonance in an orientation parallel to the c-axis (LSPR∥).

That is, the complex tungsten oxide particles have three absorption components: absorption due to localized surface plasmon resonance in an orientation perpendicular to the c-axis (perpendicular direction) (LSPR⊥); absorption due to localized surface plasmon resonance in an orientation parallel to the c-axis (parallel direction) (LSPR∥); and polaron absorption. Therefore, the molar extinction coefficient curve of the complex tungsten oxide particles can be separated into three absorption curves.

Specifically, a wavelength on a horizontal axis of the molar extinction coefficient curve is converted into energy (eV), and the molar extinction coefficient curve is fitted with Gaussian and Lorentzian distributions based on Mie scattering theory. Then, the curve is separated into an absorption curve corresponding to localized surface plasmon resonance in an orientation perpendicular to the c-axis (LSPR⊥), an absorption curve corresponding to localized surface plasmon resonance in an orientation parallel to the c-axis (LSPR∥), and an absorption curve corresponding to polaron absorption.

In addition, verification is performed such that a curve obtained by summing the three separated absorption curves coincides with the measured molar extinction coefficient curve.

To separate the molar extinction coefficient curve into three absorption curves, a Gaussian distribution is applied when the molar extinction coefficient curve with respect to energy (wavelength) is substantially symmetric, whereas a Lorentzian distribution is applied when the curve is asymmetric. Through this curve separation process, the three absorption curves are obtained, thereby allowing determination of the mean value of each Gaussian or Lorentzian distribution, that is, the peak energy (wavelength).

In Non-Patent Document 6, the molar extinction coefficient curve is separated into three absorption components: absorption due to localized surface plasmon resonance in an orientation perpendicular to the c-axis (LSPR⊥); absorption due to localized surface plasmon resonance in an orientation parallel to the c-axis (LSPR∥); and polaron absorption. Further, Non-Patent Document 6 reports that the complex tungsten oxide particles exhibit absorption peaks, from the low-energy side, in the order of localized surface plasmon resonance in an orientation perpendicular to the c-axis, localized surface plasmon resonance in an orientation parallel to the c-axis, and polaron absorption. That is, absorption due to polarons appears in a higher-energy region (a shorter-wavelength side of the near-infrared region).

According to Non-Patent Document 6, the peak of the absorption curve attributed to localized surface plasmon resonance in an orientation perpendicular to the c-axis (LSPR⊥) appears in a range of approximately 0.7 eV to 0.9 eV, and the peak of the absorption curve attributed to localized surface plasmon resonance in an orientation parallel to the c-axis (LSPR∥) appears in a range of approximately 0.9 eV to 1.0 eV. Further, the peak of the absorption curve attributed to polaron absorption appears in a range of approximately 1.3 eV to 1.5 eV. In specific absorption curve fitting, fitting is performed on the assumption that each absorption peak exists within a range expanded by $\pm 0.2$ eV from the above-described energy range corresponding to each absorption peak.

Each Gaussian distribution is represented by Expression (1).

[Math. 1]

$$\sigma_g = A exp \left\{ -\frac{(E - b)^2}{2c^2} \right\} \quad \cdots (1)$$

In Expression (1), A represents the peak intensity, b represents the mean value, E represents the energy, and c represents the standard deviation.

The Lorentzian distribution is represented by the following Expression (2).

[Math. 2]

$$\sigma_R = \frac{1}{\pi} \frac{d}{(E - b)^2 + d^2} \quad \cdots (2)$$

In Expression (2), E represents the energy, b represents the mean value, and d represents a constant.

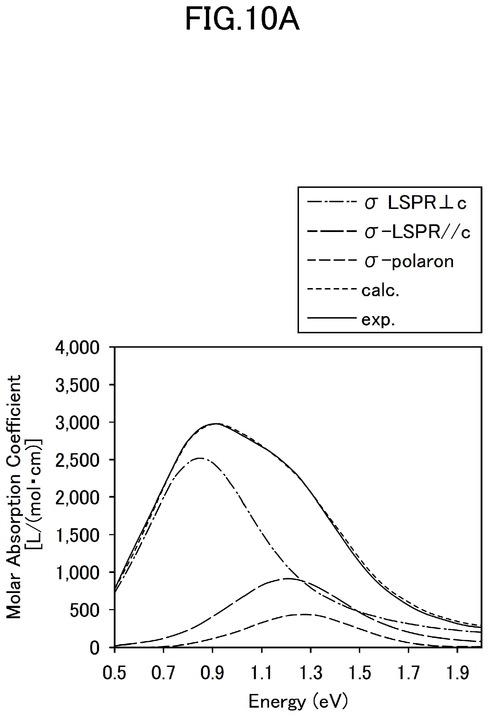

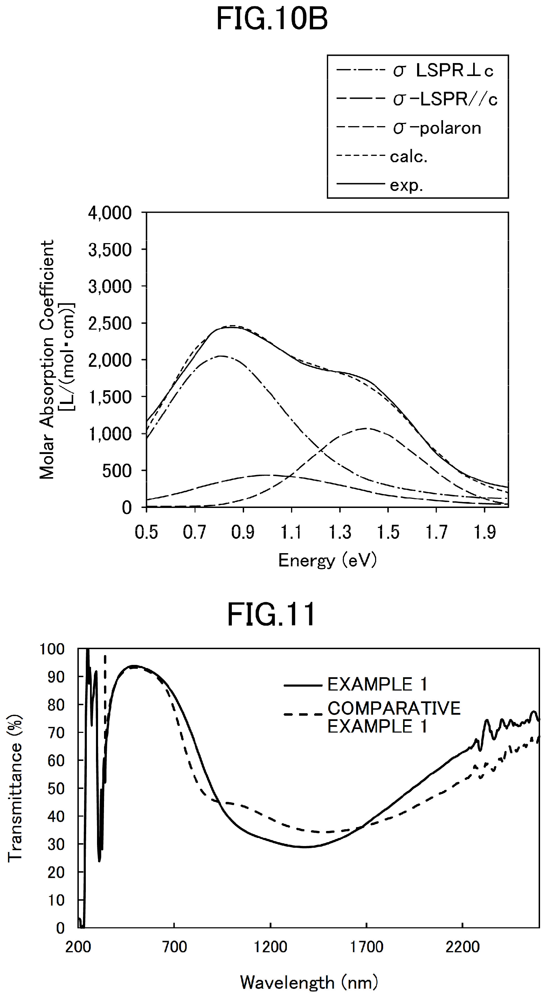

FIGS. 10A and 10B show results obtained by separating the molar extinction coefficient curve in an energy range of 0.5 eV to 2.0 eV (corresponding to a wavelength range of 620 nm to 2,500 nm) using these functions. The near-infrared region (wavelength range of 780 nm to 2,500 nm) corresponds to an energy range of 0.5 eV to 1.59 eV.

FIG. 10A shows a molar extinction coefficient curve of complex tungsten oxide particles according to Example 1, which is an example of the complex tungsten oxide particles of the present embodiment. FIG. 10B shows a molar extinction coefficient curve of complex tungsten oxide particles according to Comparative Example 1, which is an example of the complex tungsten oxide particles obtained by synthesis using a solid-phase method known in the related art followed by pulverization.

Although FIGS. 10A and 10B are merely examples and the absorption curves therein are illustrative and not limited thereto, the complex tungsten oxide particles of the present embodiment exhibit a tendency similar to that of the molar extinction coefficient curve shown in FIG. 10A.

In the complex tungsten oxide particles according to Example 1 illustrated in FIG. 10A, an absorption peak in an absorption curve of localized surface plasmon resonance (LSPR⊥) in an orientation perpendicular to the c-axis is observed at 0.86 eV (wavelength: 1,435 nm), and an integrated intensity of the absorption curve is 96,015.38 [L·eV/(mol·cm)].

In the molar extinction coefficient curve shown in FIG. 10A, an absorption peak in an absorption curve of localized surface plasmon resonance (LSPR∥) in an orientation parallel to the c-axis is observed at 1.20 eV (wavelength: 1,030 nm), and an integrated intensity of the absorption curve is 33,042.00 [L·eV/(mol·cm)].

In the molar extinction coefficient curve shown in FIG. 10A, an absorption peak in an absorption curve of polaron absorption is observed at 1.26 eV (wavelength: 985 nm), and an integrated intensity of the absorption curve is 12,265.60 [L·eV/(mol·cm)].

Among the integrated intensities of the three absorption curves in the molar extinction coefficient curve shown in FIG. 10A, a ratio of the integrated intensity of the absorption curve of polaron absorption is 8.7%. The complex tungsten oxide particles of Example 1 are synthesized by a flame method, and therefore exhibit a reduced integrated intensity of polaron absorption as compared with complex tungsten oxide particles synthesized by a solid-phase method known in the related art.

FIG. 10B shows a molar extinction coefficient curve of complex tungsten oxide particles according to Comparative Example 1, which are obtained by synthesis using a solid-phase method known in the related art followed by pulverization. In the molar extinction coefficient curve shown in FIG. 10B, an absorption peak in an absorption curve of localized surface plasmon resonance (LSPR⊥) in an orientation perpendicular to the c-axis is observed at 0.80 eV (wavelength: 1,550 nm), and an integrated intensity of the absorption curve is 78,843.30 [L·eV/(mol·cm)].

In the molar extinction coefficient curve shown in FIG. 10B, an absorption peak in an absorption curve of localized surface plasmon resonance (LSPR∥) in an orientation parallel to the c-axis is observed at 1.00 eV (wavelength: 1,240 nm), and an integrated intensity of the absorption curve is 20,209.67 [L·eV/(mol·cm)].

In the molar extinction coefficient curve shown in FIG. 10B, an absorption peak in an absorption curve of polaron absorption is observed at 1.40 eV (wavelength: 885 nm), and an integrated intensity of the absorption curve is 31,174.01 [L·eV/(mol·cm)].

Among the integrated intensities of the three absorption curves in the molar extinction coefficient curve shown in FIG. 10B, a ratio of the integrated intensity of the absorption curve of polaron absorption is 23.9%.

As is apparent from the comparison of the ratios of the integrated intensities of the absorption curves of polaron absorption, the complex tungsten oxide particles of Example 1 exhibit weaker polaron absorption than the complex tungsten oxide particles of Comparative Example 1. This is also demonstrated by the fact that the peak value of the absorption curve of polaron absorption appearing at 1.26 eV (wavelength: 985 nm) for the complex tungsten oxide particles of Example 1 is lower than the peak value of polaron absorption appearing at 1.40 eV (wavelength: 885 nm) for the complex tungsten oxide synthesized by a solid-phase method.

Furthermore, the complex tungsten oxide particles of Example 1 exhibit higher proportions of the integrated intensities of absorption curves of LSPR⊥ and LSPR∥, which are absorptions due to localized surface plasmon resonance. In particular, in the complex tungsten oxide particles of Example 1, the proportion of the integrated intensity of the absorption curve of LSPR∥ is higher than the proportion of the integrated intensity of the complex tungsten oxide particles of Comparative Example 1 obtained by synthesis using a solid-phase method and pulverization. These differences in absorption states are reflected in optical properties.

Here, the integrated intensity of each of the three absorption curves is an integrated intensity measured in a range of 0.5 eV to 2.0 eV (corresponding to a wavelength range of 620 nm to 2,500 nm). By comparing the integrated intensities of the three absorption components, namely, localized surface plasmon resonance (LSPR⊥) in an orientation perpendicular to the c-axis, localized surface plasmon resonance (LSPR∥) in an orientation parallel to the c-axis, and polaron absorption, within the above range, contributions of the three absorption components in the near-infrared region (wavelength range of 780 nm to 2,500 nm) can be evaluated.

In the complex tungsten oxide particles of the present embodiment, a proportion of the integrated intensity of polaron absorption in a total of the integrated intensity of absorption of localized surface plasmon resonance (LSPR⊥) in an orientation perpendicular to the c-axis, the integrated intensity of absorption of localized surface plasmon resonance (LSPR∥) in an orientation parallel to the c-axis, and the integrated intensity of polaron absorption is preferably 20% or less, more preferably 15% or less, and still more preferably 12% or less.

A sum of an integrated intensity of absorption of localized surface plasmon resonance (LSPR⊥) in an orientation perpendicular to a c-axis, an integrated intensity of absorption of localized surface plasmon resonance (LSPR∥) in an orientation parallel to the c-axis, and an integrated intensity of polaron absorption is equal to an integrated intensity of the molar extinction coefficient curve measured in a range of 0.5 eV to 2.0 eV. Accordingly, this means that an integrated intensity of polaron absorption in a range of 0.5 eV to 2.0 eV is preferably 20% or less of an integrated intensity of the molar extinction coefficient curve measured in the same range.

As shown in FIG. 10B, in the complex tungsten oxide particles of Comparative Example 1, a peak of polaron absorption appears around 1.40 eV (wavelength: 885 nm). Since complex tungsten oxide particles exhibiting strong polaron absorption have absorption with a peak at a wavelength of around 885 nm, transmission of red light in the visible light region is reduced, and a transmitted color tends to be less neutral.

In the complex tungsten oxide particles of the present embodiment, it is preferable that an integrated intensity of polaron absorption of complex tungsten oxide crystals contained in the complex tungsten oxide particles be 20% or less relative to an integrated intensity of a molar extinction coefficient curve measured in a range of 0.5 eV to 2.0 eV of a dispersion liquid or a dispersion. By setting the proportion of the integrated intensity of polaron absorption within the above range, the proportion of the integrated intensity of polaron absorption can be made smaller than a proportion of the integrated intensity of polaron absorption relative to the integrated intensity of a molar extinction coefficient curve in complex tungsten oxide particles synthesized by a solid-phase method known in the related art. Accordingly, absorption at a wavelength of around 885 nm is weakened, and as a result, transmission of red light in the visible light region is not reduced, so that a neutral color tone is easily obtained. From the viewpoint of such properties, in a dispersion liquid or a dispersion of the complex tungsten oxide particles of the present embodiment, it is preferable that the proportion of the integrated intensity of polaron absorption relative to the integrated intensity of the molar extinction coefficient curve measured in a range of 0.5 eV to 2.0 eV be 20% or less.

In addition, in a molar extinction coefficient curve measured in a range of 0.5 eV to 2.0 eV of a dispersion liquid or a dispersion of the complex tungsten oxide particles of the present embodiment, it is preferable that an integrated intensity of an absorption curve of polaron absorption be lower than an integrated intensity of an absorption curve of localized surface plasmon absorption in an orientation parallel to a c-axis of complex tungsten oxide crystals contained in the complex tungsten oxide particles.

A relationship between the integrated intensity of the absorption curve of localized surface plasmon absorption in an orientation parallel to the c-axis and the integrated intensity of polaron absorption is also reflected in a relationship between peak values of the respective absorption curves.

Accordingly, in a molar extinction coefficient curve measured in a range of 0.5 eV to 2.0 eV for a dispersion liquid or a dispersion of the complex tungsten oxide particles of the present embodiment, it is preferable that a peak value of an absorption curve of polaron absorption be lower than a peak value of an absorption curve of localized surface plasmon absorption in an orientation parallel to the c-axis of complex tungsten oxide crystals contained in the complex tungsten oxide particles.

In the complex tungsten oxide particles of the present embodiment, an integrated intensity or a peak value of an absorption curve of localized surface plasmon absorption in an orientation parallel to the c-axis is higher than an integrated intensity or a peak value of polaron absorption, thereby exhibiting rapid absorption of infrared rays at a wavelength of around 1,000 nm. That is, the complex tungsten oxide particles of the present embodiment exhibit weak absorption of light at a wavelength of around 800 nm due to polaron absorption, while exhibiting an effect of absorbing infrared rays at a wavelength of around 1,000 nm. In contrast, in complex tungsten oxide particles synthesized by a solid-phase method known in the related art, as shown in FIG. 10B, an integrated intensity or a peak value of polaron absorption is higher than an integrated intensity or a peak value of localized surface plasmon absorption in an orientation parallel to the c-axis. This difference is reflected in a hue of transmitted light. According to the complex tungsten oxide particles of the present embodiment, when the complex tungsten oxide particles are formed into a dispersion liquid or a dispersion, transmitted light can have a neutral color tone. Furthermore, the complex tungsten oxide particles of the present embodiment can exhibit excellent visible light transmittance and near-infrared ray shielding properties.

The reason that polaron absorption of the complex tungsten oxide particles of the present embodiment is weak is considered to be that complex tungsten oxide particles having a particle diameter of 1 $\mu$m or less are directly synthesized during production of the complex tungsten oxide particles of the present embodiment. That is, damage to the complex tungsten oxide particles is small when the particle diameter is reduced to, for example, 200 nm or less by pulverization, and defects in crystal lattices are less likely to occur. In contrast, with a solid-phase method known in the related art, particles having a particle diameter exceeding 1 $\mu$m are pulverized to, for example, 200 nm or less, and thus defects are likely to occur in crystal lattices of the particles. Electrons contributing to polaron absorption are electrons derived from such defects. Accordingly, the complex tungsten oxide particles of the present embodiment have fewer defects due to the production process, resulting in reduced polaron absorption and transmitted light having a neutral color tone in terms of properties.

According to Drude-Lorentz analysis by Machida et al. in Non-Patent Document 6, Cs free electrons contribute to an absorption peak in the absorption curve of LSPR∥ at 1.0 eV in $Cs_{0.32}WO_{3-y}$ particles prepared by a solid-phase method in the same manner as in Comparative Example 1.

In contrast, $V_0$ electrons (electrons derived from oxygen vacancies) contribute to an absorption peak (0.8 eV) in the absorption curve of LSPR⊥ in the xy direction and to an absorption peak in the absorption curve of polaron absorption around 1.5 eV. As a result of overlap of these three types of absorption, the molar extinction coefficient curve of complex tungsten oxide particles prepared by the solid-phase method and pulverized exhibits a peak at 0.9 eV with a shoulder at 1.5 eV.

From the above findings and the results shown in FIGS. 10A and 10B, the absorption peak of the complex tungsten oxide particles of the present embodiment prepared by the flame spray method of Example 1 includes a smaller absorption peak attributed to $V_0$ and a larger absorption peak of localized surface plasmon resonance (LSPR∥) in an orientation parallel to the c-axis attributed to Cs free electrons, as compared with the absorption peak of the complex tungsten oxide particles of Comparative Example 1 prepared by the solid-phase method.

An integrated intensity of localized surface plasmon absorption in an orientation parallel to a c-axis of complex tungsten oxide crystals contained in the complex tungsten oxide particles is preferably 10% to 30%, more preferably 15% to 30%, and still more preferably 20% to 30%, relative to an integrated intensity of a molar extinction coefficient curve measured in a range of 0.5 eV to 2.0 eV for a dispersion liquid or a dispersion of the complex tungsten oxide particles of the present embodiment. As described above, the localized surface plasmon absorption in the orientation parallel to the c-axis of the complex tungsten oxide particles of the present embodiment contributes to absorption of light having a wavelength of around 1,000 nm. When the integrated intensity of the localized surface plasmon absorption in the orientation parallel to the c-axis satisfies the above ranges relative to the integrated intensity of the molar extinction coefficient curve measured in the range of 0.5 eV to 2.0 eV, the complex tungsten oxide particles of the present embodiment consequently exhibit excellent near-infrared ray shielding properties.

Furthermore, a molar extinction coefficient of a powder of the complex tungsten oxide particles in a dispersion liquid or a dispersion can be determined from the molar extinction coefficient curve. The molar extinction coefficient of the powder of the complex tungsten oxide particles of the present embodiment is preferably 2,600 L/(mol·cm) or more, and more preferably 2,800 L/(mol·cm) or more.

Even in complex tungsten oxide particles known in the related art, by adjusting production conditions, a peak value of an absorption curve of polaron absorption can be made lower than a peak value of an absorption curve of localized surface plasmon absorption in an orientation parallel to a c-axis.

However, for complex tungsten oxide particles known in the related art, when the peak value of the absorption curve of the polaron absorption is made lower than the peak value of the absorption curve of the localized surface plasmon absorption in the orientation parallel to the c-axis, the molar extinction coefficient becomes less than 2,000 L/(mol·cm). For infrared ray shielding materials, a high molar extinction coefficient is preferable, since a higher molar extinction coefficient allows even a small amount of an infrared ray absorbing material to exhibit an excellent infrared ray shielding effect.

FIG. 11 is an optical transmittance profile of a dispersion liquid containing 0.5 g/m$^2$ of the complex tungsten oxide particles according to Example 1 and a dispersion liquid containing 0.5 g/m$^2$ of the complex tungsten oxide particles according to Comparative Example 1, which are an example of complex tungsten oxide particles known in the related art. The molar extinction coefficient of the complex tungsten oxide particles according to Example 1, obtained from the optical transmittance profile shown in FIG. 11, is 3000 L/(mol·cm), whereas the molar extinction coefficient of the complex tungsten oxide particles according to Comparative Example 1 is 2,500 L/(mol·cm). As shown in FIG. 11, even when the amount of the complex tungsten oxide particles per unit area is the same, the transmittance of the complex tungsten oxide particles according to Example 1, which are an example of the complex tungsten oxide particles of the present embodiment, is lower in a wavelength range from around 900 nm to around 1,680 nm, indicating a higher near-infrared ray absorption effect.

Therefore, the complex tungsten oxide particles of the present embodiment can realize an excellent near-infrared ray shielding effect and a neutral color tone.

[Method for Producing Complex Tungsten Oxide Particles]

An outline of a method for producing the complex tungsten oxide particles of the present embodiment will be described.

According to the method for producing the complex tungsten oxide particles of the present embodiment, the above-described complex tungsten oxide particles can be produced, and thus descriptions of matters already explained will be omitted. Here, merely an example configuration of the method for producing the complex tungsten oxide particles is described, and the method for producing the complex tungsten oxide particles of the present embodiment is not limited to the following example configuration.

The method for producing the complex tungsten oxide particles of the present embodiment preferably allows direct synthesis of complex tungsten oxide particles having a particle diameter of 1 μm or less. When the complex tungsten oxide particles having a particle diameter of 1 μm or less are directly synthesized, fine particles that are less affected by damage due to pulverization or dispersion, for example, complex tungsten oxide particles having a particle diameter of 800 nm or less, can be obtained.

A method for directly synthesizing complex tungsten oxide particles having a particle diameter of 1 μm or less preferably includes a heating step in which an aerosol of a source material containing an element M source and a tungsten element source is supplied to an electric furnace, a flame, or a plasma.

Note that the element M source is a source material containing the element M, and the tungsten element source is a source material containing tungsten.

Therefore, the method for producing the complex tungsten oxide particles of the present embodiment can include a source material preparation step, an aerosol forming step, a heating step, and a reduction step.

In the source material preparation step, the source material containing the element M source and the tungsten element source can be prepared.

In the aerosol forming step, the source material prepared in the source material preparation step can be aerosolized.

In the heating step, the aerosolized source material can be heated a reaction field.

In the reduction step, particles obtained in the heating step can be reduced in an atmosphere containing a reducing gas.

(1) Steps

Hereinafter, each step of the method for producing the complex tungsten oxide particles of the present embodiment will be described.

(1-1) Source Material Preparation Step

In the source material preparation step, the source material containing the element M source and the tungsten element source (hereinafter also referred to as an "element W source") can be prepared.

In the source material preparation step, the source material can be formulated and prepared such that a ratio of an amount of substance of the element M to an amount of substance of the element W contained in the source material corresponds to a composition of target complex tungsten oxide particles.

A state of the source material prepared in the source material preparation step is not particularly limited, and may be liquid or solid, and it is preferable that an aerosol can be formed by spraying or the like. Note that an aerosol refers to a mixture of minute liquid or solid particles suspended in a gas and the surrounding gas.

(Case Where Source Material Is Liquid)

In a case where the source material is a liquid, for example, the source material can be prepared by preparing a solution containing the element M source and the element W source.

Alternatively, a solution containing the element M source and a solution containing the element W source may be prepared in advance, and the two solutions may be mixed in the source material preparation step to obtain a source material mixture solution, which is the source material.

For example, the source material may be supplied to a heating step described later in the form of droplets. In this case, the source material preparation step may be performed by mixing a solution containing the element M source and a solution containing the element W source immediately before supplying the source material to a droplet forming unit (droplet forming means) configured to form the droplets, or within the droplet forming unit. Then, the aerosol forming step described later may be performed in the droplet forming unit.

For example, when mixing a solution containing the element M source and a solution containing the element W source in advance causes problems such as gelation, it is preferable, as described above, to prepare both solutions in advance and mix the solutions immediately before the aerosol forming step. When the source material preparation step is performed immediately before the aerosol forming step, an amount-of-substance ratio of the element M to the element W in the source material can be adjusted to a desired range by adjusting concentrations of the two solutions and feeding rates of the two solutions to the droplet forming unit.

As described above, when the source material preparation step is performed immediately before the aerosol forming step, the aerosol forming step and the source material preparation step need not be clearly distinguished, and the two steps may be performed continuously.

As described above, when a solution containing the element M source and a solution containing the element W source are mixed in the source material preparation step, a specific method of mixing is not particularly limited, and any suitable method may be used.

The element W source is not particularly limited if the element W source is a source material containing tungsten. Examples include elemental tungsten and tungsten compounds. The element W source may be a tungsten salt or the like, and for example, may be preferably hexacarbonyltungsten. Hexacarbonyltungsten can be expressed as, for example, $W(CO)_6$. Moreover, a solution containing the element W source may be preferably an organic solution containing the element W source from the viewpoint of ease of handling and the like.

The element M source is also not particularly limited if the element M source is a source material containing the element M. Examples include elemental M and element M-containing compounds. The element M source may be a solution containing the element M source. The solution containing the element M source may be, for example, a solution of a salt containing the element M. The type of the salt containing the element M, which is an element M source, is not particularly limited, and one or more salts selected from carbonate, acetate, nitrate, hydroxide, and the like of the element M may be used.

The solution containing the element M source may be an ethanol solution containing the element M source from the viewpoint of ease of handling and the like.

For example, even when the element M is cesium, the salt containing element M may be one or more salts selected from carbonate, acetate, nitrate, hydroxide, and the like containing cesium, and acetate is particularly preferable. This is because cesium acetate is particularly easy to dissolve in ethanol.

The proportion of the element M relative to one mole of the tungsten element in the obtained complex tungsten oxide, that is, the doping amount, is determined by the ratio of the element W source to the element M source when the source material mixture solution is formed. Accordingly, the doping amount can be controlled based on, for example, the concentration of the solution containing the element W source, the concentration of the solution containing the element M source, or the like.

The concentration of the element W source contained in the solution containing the element W source, that is, the concentration of an element W salt or the like, is not particularly limited. For example, the tungsten concentration in the solution containing the element W source is preferably from 0.001 mol/L to 10 mol/L, more preferably from 0.01 mol/L to 10 mol/L, and still more preferably from 0.01 mol/L to 1 mol/L.

This is because, when the tungsten concentration in the solution containing the element W source is 0.001 mol/L or more, the production amount of the complex tungsten oxide particles per unit time can be sufficiently secured, and a sufficient amount can be recovered by, for example, a filter, thereby improving productivity.

Moreover, when the tungsten concentration in the solution containing the element W source is 10 mol/L or less, re-precipitation of the dissolved element W source can be suppressed, agglomeration of the generated particles can be suppressed, and unintended inclusion of, for example, coarse complex tungsten oxide particles having a particle diameter larger than 1 $\mu$m can be suppressed.

Furthermore, additives such as a pH-adjusting agent or a surfactant may be added to the solution containing the element W source.

The concentration of the element M source contained in the solution containing the element M source is not particularly limited, and may be selected in accordance with a desired composition of the complex tungsten oxide particles to be produced, the concentration of the element W source in the solution containing the element W source, and the like.

In addition to the solution containing the element W source and the solution containing the element M source, an optional component may be added to the source material mixture solution.

(Case Where Source Material Is Solid)

Although the case where the source material is a liquid has been described above as an example, the source material may be a solid, for example, in the form of a powder.

In a case where the source material is a powder, for example, the source material can be prepared by mixing a powder of an element M compound and a powder of an element W compound. Alternatively, the source material may be a precursor powder obtained by adding a tungsten compound powder to a solution containing the element M source, stirring the mixture, and removing the solvent by drying or the like.

In a case where the source material is a solid, the element W source is not particularly limited, and a tungsten salt or the like may be used. For example, $H_2WO_4$ or ammonium paratungstate may be preferably used.

In $H_2WO_4$, elements other than tungsten are H (hydrogen) and O (oxygen), and the elements other than tungsten are discharged out of the system in the heating step described later. Therefore, $H_2WO_4$ may be preferably used as the element W source, since complex tungsten oxide particles in which the unintended inclusion of impurities is suppressed can be obtained.

The element M source may be, for example, a powder of a salt containing the element M. The type of the salt containing the element M is not particularly limited, and one or more salts selected from carbonate, acetate, nitrate, hydroxide, and the like of the element M may be used.

For example, even when the element M is cesium, the salt containing element M may be one or more salts selected from carbonate, acetate, nitrate, hydroxide, and the like containing cesium, and carbonate is particularly preferable.

(1-2) Aerosol Forming Step

In the method for producing the complex tungsten oxide particles of the present embodiment, it is preferable that the source material prepared in the source material preparation step be supplied to the heating step in the form of an aerosol. Specifically, an aerosol containing the source material may be conveyed by a carrier gas such as oxygen and supplied for the heating step.

Therefore, the method for producing the complex tungsten oxide particles of the present embodiment can include an aerosol forming step in which the source material is formed into an aerosol containing droplets or particles of the source material.

A means and a method for forming the aerosol in the aerosol forming step are not particularly limited and may be selected in accordance with the state of the source material or the like.

In a case where the source material is a liquid, the aerosol may be formed by spraying the liquid source material toward a carrier gas using various atomizers such as a centrifugal atomizer or a two-fluid nozzle. Alternatively, droplets may be formed by applying ultrasonic irradiation to the liquid.

In a case where the source material is a powder, the aerosol may be formed by a device configured to form a dispersed state of the powder source material and supplies the powder into a gas stream. For example, the aerosol may be formed by an aerosol forming device including a stirring portion such as a rotating brush or stirring blade, and a powder supply portion including a piston, a screw feeder, or the like configured to feed the source material to the stirring portion. The powder source material supplied from the powder supply portion is dispersed into particles of the powder by the stirring portion, and an aerosol may be generated from the powder source material by feeding the particles into a carrier gas. The stirring portion may be configured such that a rotation speed of the brush or stirring blade is selectable, so that the powder source material can be dispersed into particles, and the stirring portion is preferably rotated at a high speed.

When droplets dispersed in a gas are formed in the aerosol forming step, the size of the droplets to be formed is not particularly limited. However, the diameter of the droplets is preferably 100 $\mu$m or less, more preferably 10 $\mu$m or less, and still more preferably 5 $\mu$m or less. By setting the diameter of the droplets to 100 $\mu$m or less, coarsening of the resulting complex tungsten oxide particles can be suppressed, and complex tungsten oxide particles on the order of nanometers can be obtained. Note that the lower limit of the droplet size formed in the aerosol forming step is not particularly limited. However, since forming excessively small droplets is difficult and may reduce productivity, the diameter of the droplets is preferably 1 $\mu$m or more, for example.

When solid particles dispersed in a gas are formed in the aerosol forming step, the size of the particles is not particularly limited. However, the diameter of the particles is preferably 100 $\mu$m or less, more preferably 10 $\mu$m or less, and

still more preferably 3 $\mu$m or less. By setting the diameter of the particles to 100 $\mu$m or less, heating can be performed more reliably to the interior of the particles. The diameter of the particles can be measured in the same manner as the particle diameter of the complex tungsten oxide particles described above.

(1-3) Heating Step

In the heating step, the source material can be heated to convert the source material into complex tungsten oxide particles. Heating is performed such that the source material can be at least heated at a temperature of 500°C or higher, and the configuration of the heat source is not particularly limited. Accordingly, the heating step may be carried out by a method in which the source material is introduced into a flame, a tubular electric furnace, or a plasma, for example, using a carrier gas. In the case of using a flame, an electric furnace, or a plasma, the heating temperature can be 500°C or higher. When heating is performed at 500°C or higher, compounds contained in the source material are decomposed, and tungsten reacts with the element M to form a complex tungsten oxide.

The heating temperature is 500°C or higher to proceed the reaction between tungsten and the element M, and is preferably 550°C or higher, and more preferably 1,000°C or higher. The upper limit of the heating temperature is not particularly limited. However, from the viewpoint of suppressing energy consumption, it is preferably 4,000°C or lower.

In the heating step, for example, a flame may be used as described above, and the source material may be heated using the flame. By using a flame in the heating step and adjusting the temperature of the reaction field of the flame, the particle diameter of the resulting complex tungsten oxide particles can be selected.

When complex tungsten oxide particles are synthesized by spraying a liquid source material into a carrier gas to form droplets and introducing the droplets into a flame, the droplets of the source material travel through the flame carried by a carrier gas such as oxygen. When the droplets of the source material are conveyed into the flame, an organic solvent containing the tungsten source and the element M source, which are the source materials, is combusted, and the organic solvent is decomposed by the combustion reaction. Heat generated by the combustion reaction contributes to decomposition of the element W source and the element M source, and precipitation occurs during a cooling process in a tail flame region of the flame field.

For example, as described above, hexacarbonyltungsten or the like may be used as the element W source, and cesium acetate may be used as the element M source when the element M is cesium. These salts are decomposed in the heating step. In this case, W readily precipitates as $WO_6$, whereas Cs does not readily form an oxide as a monomer, and part of the cesium passes through a filter and is discharged out of the system without precipitating as nanosized powder.

In this case, tungsten reacts with the element M during a decomposition process of the solute components, thereby forming a complex tungsten oxide.

When a flame is used in the heating step, conditions for forming the flame are not particularly limited. However, the flame may be formed using a mixed gas containing oxygen and a hydrocarbon. By forming the flame using a mixed gas containing oxygen and a hydrocarbon, a flame having a stable temperature can be obtained, thereby producing complex tungsten oxide particles with reduced variation in particle diameter and the like.

Methods for adjusting the size and temperature of the flame are not particularly limited. For example, adjustment may be performed by controlling a flow rate ratio between oxygen and a combustible gas such as a hydrocarbon in a mixed gas supplied to the flame, while maintaining a flow rate ratio that allows combustion of the combustible gas. This is because the heat output can be adjusted while securing an amount of oxygen required for combustion of the combustible gas.

For example, when the flame is formed using a gas mixture containing oxygen and propane, a volume flow rate ratio of oxygen to propane in the gas mixture is preferably from 5 to 8 relative to 1 part of propane. In this case, the flow rate of propane is preferably from 0.5 L/min to 2 L/min.

This is because, when the flow rate of propane is set to 1, setting the flow rate of oxygen to 5 or more allows combustion of propane, which is a combustible gas, to be sufficiently promoted. However, in order to prevent an excessive supply of oxygen, it is preferable that the flow rate of oxygen supplied be 8 or less relative to a flow rate of 1 of propane.

The heating temperature, such as that in the flame reaction field, also affects the particle diameter of the resulting complex tungsten oxide particles.

This is presumed to be because thermal energy in the flame reaction field or the like is used for sublimation of the generated complex tungsten oxide particles, and the particles are fragmented by the sublimation, thereby obtaining particles having a fine particle diameter.

The complex tungsten oxide particles obtained by heating can be recovered, for example, using a filter.

(1-4) Reduction Step

The particles obtained through the heating step, that is, the complex tungsten oxide particles, do not exhibit near-infrared ray absorption properties in some cases. Therefore, as a result of investigation by the inventors of the present invention, it was found that by further carrying out a reduction step of reducing the complex tungsten oxide particles obtained through the heating step, the complex tungsten oxide particles can exhibit near-infrared ray absorption properties.

Therefore, the method for producing the complex tungsten oxide particles of the present embodiment may include a reduction step of reducing, in an atmosphere containing a reducing gas, the particles obtained through the heating step. Specifically, for example, the method for producing the complex tungsten oxide particles of the present embodiment may include a reduction step of reducing, in an atmosphere containing a reducing gas at a temperature in a range of higher than 400°C to lower than 700°C, the complex tungsten oxide particles after the heating step.

Although the reduction conditions are not particularly limited, it is preferable to select the reduction conditions so that the crystal structure of the complex tungsten oxide particles does not change before and after the reduction step and metallic tungsten or the like does not precipitate, when the reduced complex tungsten oxide particles are analyzed by an X-ray diffraction pattern.

In the reduction step, the complex tungsten oxide particles obtained in the heating step can be reduced by raising and lowering the temperature in a reducing atmosphere containing a reducing gas, that is, by a heat treatment.

During the reduction step, the complex tungsten oxide particles may be stirred or kept static, and the handling of the complex tungsten oxide particles in the reduction step can be selected as appropriate, but it is preferable to select the handling conditions so that metallic tungsten does not precipitate.

The temperature for the reduction (reduction temperature) is preferably higher than 400°C, more preferably 450°C or higher, and still more preferably 500°C or higher.

The upper limit of the reduction temperature is not particularly limited, but is preferably lower than 700°C, more preferably 650°C or lower, and still more preferably lower than 650°C.

In a case where the source material is a liquid, the particle size obtained decreases as the concentration of the source material is decreased in the aerosol forming step. Since particles having a smaller particle diameter are more easily reduced, the temperature in the reduction step can be lowered. In the reduction step, after the temperature is raised from room temperature to the reduction temperature, the temperature can be lowered to room temperature again.

The reduction conditions can be determined based on the optical properties of the resulting complex tungsten oxide particles.

When the temperature for the reduction is higher than 400°C, the reduction of the complex tungsten oxide particles proceeds, thereby more reliably exhibiting near-infrared ray absorption properties. When the temperature is lower than 700°C, reduction of the complex tungsten oxide particles to metallic tungsten can be suppressed.

The reduction atmosphere is preferably an atmosphere including a mixed gas of an inert gas (e.g., argon) and a reducing gas ($H_2$ gas (hydrogen gas)), and the reducing gas is preferably $H_2$ gas.

When the reducing gas is $H_2$ gas, the $H_2$ gas content in the reduction atmosphere can be selected as appropriate. However, the $H_2$ gas content is preferably in the range of 0.1% to 10% by volume, and more preferably in the range of 2% to 10% by volume. When the reduction is carried out in an atmosphere including only the reducing gas, care must be taken because the reduction reaction may proceed excessively, resulting in precipitation of metallic tungsten.

The total time of the reduction step, from temperature raising to temperature lowering, is preferably 30 minutes or more. The upper limit of the reduction step time is not particularly limited, and is preferably selected by, for example, conducting a preliminary test or the like so that the reduction does not excessively proceed. Here, the total time from temperature raising to temperature lowering means the time from the start of raising temperature from room temperature, through reaching the reduction temperature, to cooling to room temperature. During this time, the complex tungsten oxide particles are preferably kept in the reduction atmosphere described above.

By carrying out the reduction step in this way, the complex tungsten oxide particles obtained after the heating step can be converted from an undesired phase into a desired complex tungsten oxide phase.

In the heating step or the reduction step, it is preferable to conduct a preliminary test or the like and select the heating conditions so that the above-mentioned absorption curves in the molar extinction coefficient curve have a desired relationship when the obtained complex tungsten oxide particles are formed into a dispersion liquid or a dispersion.

(2) Apparatus Suitably Used in a Method for Producing Complex Tungsten Oxide Particles

(2-1) Complex Material Producing Apparatus

An example of a configuration of a complex material producing apparatus suitably used in a method for producing complex tungsten oxide particles according to the present embodiment will be described below.

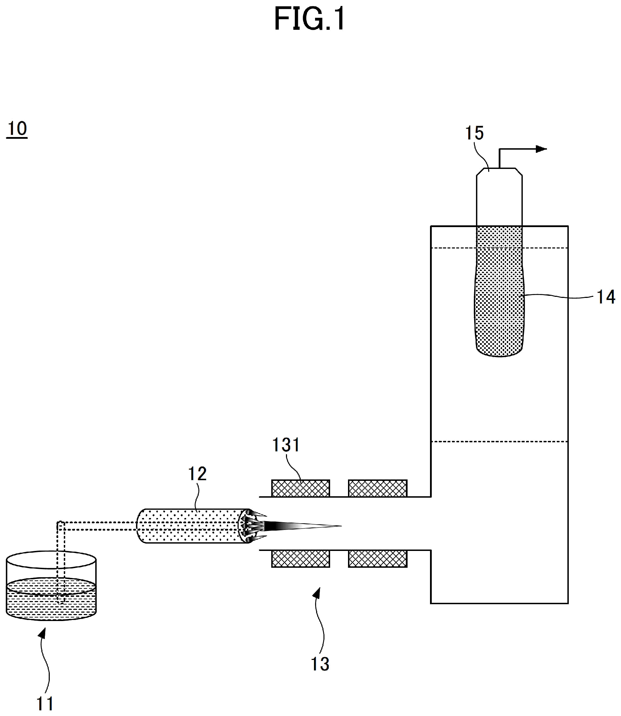

FIG. 1 is a schematic diagram of a complex material producing apparatus 10 according to the present embodiment.

The complex material producing apparatus 10 includes: a storage 11 containing a source material solution; a two-fluid nozzle 12 configured to form droplets of the source material and also form a flame; and a reaction tube 13 connected to a filter 14 configured to collect the produced complex tungsten oxide particles. The source material solution includes a solution containing the element M source and the element W source, as already described.

An aerosol is formed by supplying the source material solution and a carrier gas to the two-fluid nozzle 12 (the aerosol forming step). For example, oxygen and a hydrocarbon are supplied to the two-fluid nozzle 12 to form a flame reaction field, and the formed aerosol is supplied into the flame and subjected to heating (the heating step).

A cooling water pipe 131 is arranged around the reaction tube 13, and cooling water is circulated therethrough. The complex tungsten oxide particles introduced into the reaction tube 13 are collected by the filter 14 such as a bag filter.

Further, an ejector 15 may be provided on a most downstream side to adjust a supply amount of the carrier gas.

Here, a configuration example of the complex material apparatus in which complex tungsten oxide particles are produced by forming droplets of a source material and heating using a flame has been described. However, the configuration is not limited thereto, and the source material may be a powder or the like, and the heat source used for heating may be an electric furnace or the like.

(2-2) Reduction Apparatus

A reduction apparatus can perform the reduction step described above.

The reduction apparatus is not particularly limited if the reduction apparatus is configured to perform the reduction step described above. For example, the reduction apparatus may include: a container configured to store complex tungsten oxide particles obtained by the complex material producing apparatus described above; a gas pipe configured to supply a mixed gas serving as a reducing atmosphere into the container; and a heat source configured to heat the container.

Note that the mixed gas serving as the reducing atmosphere may be introduced into and exhausted from the container, and the complex tungsten oxide particles to be reduced may be placed under a gas stream of the mixed gas. In this case, a mixed-gas supply pipe and an exhaust pipe may be provided as gas pipes so as to form the gas stream.

A stirring blade configured to stir the complex tungsten oxide particles in the container may also be provided.

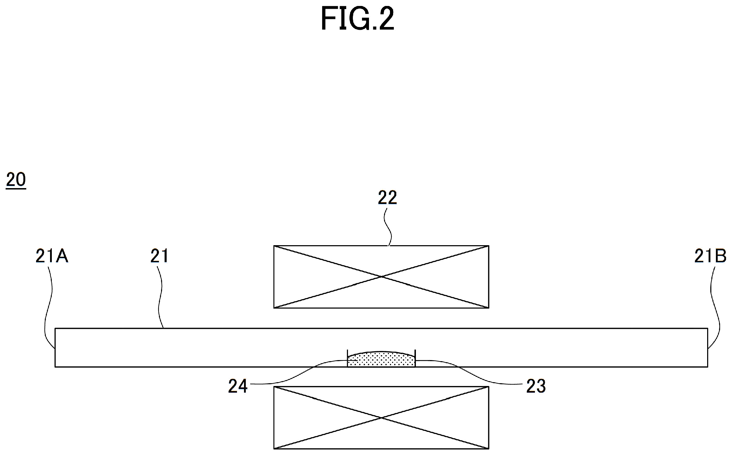

FIG. 2 is a diagram schematically illustrating a configuration example of the reduction apparatus, and shows a cross section of a reduction apparatus 20 taken along a plane passing through a central axis of a reaction tube 21.

The reduction apparatus 20 is a horizontal tubular furnace, and can be used by attaching a gas introduction tube (not shown) to a first end 21A, which is an end along a longitudinal direction of the reaction tube 21, and attaching a gas exhaust tube (not shown) to a second end 21B located opposite to the first end 21A of the reaction tube 21. By supplying a mixed gas serving as a reducing atmosphere from the first end 21A, the interior of the reaction tube 21 can be set to a reducing atmosphere.

A heater 22 may be provided around the reaction tube 21. The complex tungsten oxide particles may be placed in a ceramic container 23 such as a boat, and arranged at a position corresponding to the heater 22 within the reaction tube 21 of the tubular furnace.

By using the reduction apparatus 20, the interior of the reaction tube 21 is set to a reducing atmosphere and heated to a desired temperature by the heater 22, thereby reducing complex tungsten oxide particles 24 placed in the container 23.

[Near-Infrared Ray Absorbing Particle Dispersion Liquid]

Next, a configuration example of the near-infrared ray absorbing particle dispersion liquid according to the present embodiment will be described.

The near-infrared ray absorbing particle dispersion liquid of the present embodiment may include near-infrared ray absorbing particles and a liquid medium. The near-infrared ray absorbing particles may be complex tungsten oxide particles according to an aspect of the present disclosure.

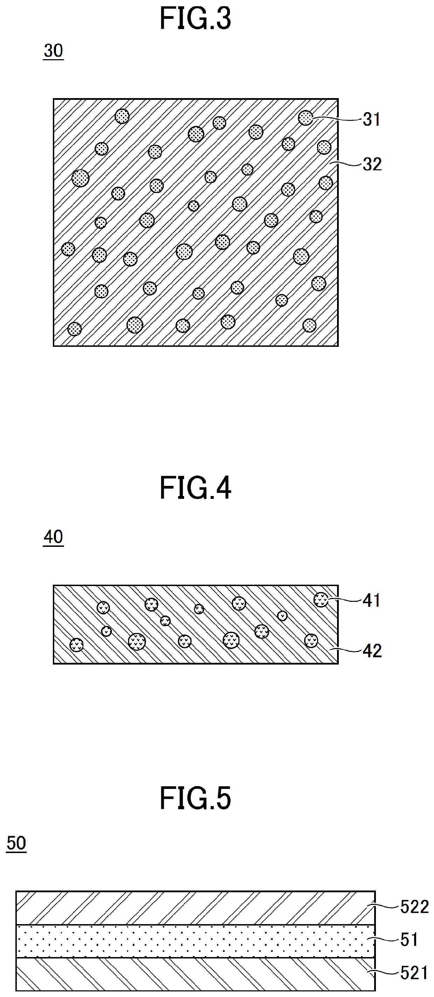

For example, as illustrated in FIG. 3, a near-infrared ray absorbing particle dispersion liquid 30 of the present embodiment may include near-infrared ray absorbing particles 31 and a liquid medium 32. The near-infrared ray absorbing particle dispersion liquid preferably has a configuration in which the near-infrared ray absorbing particles are dispersed in the liquid medium.

FIG. 3 is a schematic illustration, and the near-infrared ray absorbing particle dispersion liquid of the present embodiment is not limited to the illustrated configuration. For example, although the near-infrared ray absorbing particles 31 are represented by circles and illustrated as spherical particles in FIG. 3, the shape of the near-infrared ray absorbing particles 31, which are the above-described complex tungsten oxide particles, is not limited thereto and may be any shape. The near-infrared ray absorbing particles 31 may have, for example, a coating on surfaces thereof. In addition to the near-infrared ray absorbing particles 31 and the liquid medium 32, the near-infrared ray absorbing particle dispersion liquid 30 may further include an additional additive as necessary.

The liquid medium may be one or more media selected from water, an organic solvent, oil and fat, a liquid resin, and a liquid plasticizer.

Examples of the organic solvent include various types of solvents, such as an alcohol solvent, a ketone solvent, an ester solvent, a hydrocarbon solvent, and a glycol solvent. Specifically, the organic solvent may be one or more solvents selected from an alcohol solvent (e.g., isopropyl alcohol, methanol, ethanol, 1-propanol, isopropanol, butanol, pentanol, benzyl alcohol, diacetone alcohol, and 1-methoxy-2-propanol); a ketone solvent (e.g., dimethyl ketone, acetone, methyl ethyl ketone, methyl propyl ketone, methyl isobutyl ketone, cyclohexanone, and isophorone); an ester solvent (e.g., 3-methyl methoxypropionate and butyl acetate); a glycol derivative (e.g., ethylene glycol monomethyl ether, ethylene glycol monoethyl ether, ethylene glycol isopropyl ether, propylene glycol monomethyl ether, propylene glycol monoethyl ether, propylene glycol methyl ether acetate, and propylene glycol ethyl ether acetate); an amide (e.g., formamide, N-methylformamide, dimethylformamide, dimethylacetamide, and N-methyl-2-pyrrolidone); an aromatic hydrocarbon (e.g., toluene and xylene); and a halogenated hydrocarbon (e.g., ethylene chloride and chlorobenzene).

Among these, organic solvents having relatively low polarity are preferable. In particular, isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate, and the like are more preferable. These organic solvents may be used alone or in combination of two or more.

The oil and fat may be, for example, one or more oils and fats selected from a drying oil (e.g., linseed oil, sunflower oil, and tung oil); a semi-drying oil (e.g., sesame oil, cottonseed oil, rapeseed oil, soybean oil, and rice bran oil); a non-drying oil (e.g., olive oil, coconut oil, palm oil, and dehydrated castor oil); a fatty acid monoester prepared by direct esterification between fatty acids of a vegetable oil and a monoalcohol; an ether; and a petroleum-based solvent (e.g., Isopar (trademark) E, Exxol (trademark) Hexane, Heptane E, D30, D40, D60, D80, D95, D110, and D130 available from ExxonMobil).

The liquid resin may be, for example, one or more liquid resins selected from a liquid acrylic resin, a liquid epoxy resin, a liquid polyester resin, a liquid urethane resin, and the like.

The liquid plasticizer may be, for example, a liquid plasticizer for plastics, or the like.

The components contained in the near-infrared ray absorbing particle dispersion liquid are not limited to the above-described near-infrared ray absorbing particles and the liquid medium. The near-infrared ray absorbing particle dispersion liquid may further contain an optional component as necessary.

For example, an acid or an alkali may be added to the near-infrared ray absorbing particle dispersion liquid as necessary to adjust a pH of the dispersion liquid.

In order to further improve the dispersion stability of the near-infrared ray absorbing particles and to suppress coarsening of the dispersed particle size caused by re-aggregation in the near-infrared ray absorbing particle dispersion liquid, various surfactants, coupling agents, and the like may be added to the near-infrared ray absorbing particle dispersion liquid as a dispersant.

Although the dispersant such as a surfactant and a coupling agent, can be selected according to the application, it is preferable that the dispersant has one or more functional groups selected from an amine-containing group, a hydroxyl group, a carboxyl group, and an epoxy group. These functional groups are adsorbed on the surfaces of the near-infrared ray absorbing particles to prevent aggregation, and have an effect of uniformly dispersing the near-infrared ray absorbing particles even in an infrared ray shielding film formed using the near-infrared ray absorbing particles. The dispersant is more preferably a polymeric dispersant having one or more of the functional groups selected from the functional groups described above in the molecule.

Examples of commercially available dispersants that can be suitably used include one or more dispersants selected from Solsperse (trademark) 9000, 12000, 17000, 20000, 21000, 24000, 26000, 27000, 28000, 32000, 35100, 54000, and 250 (available from Nippon Lubrizol Corporation); EFKA (trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (available from EFKA Additives); Ajisper (trademark) PA111, PB821, PB822, and PN411, and Famex L-12 (available from Ajinomoto Fine-Techno Co., Inc.); DisperBYK (trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (available from BYK-Chemie Japan K.K.); Disparon (trademark) 1751N, 1831, 1850, 1860, 1934, DA-400N, DA-703-50, DA-705, DA-725, DA-7301, DN-900, NS-5210, and NVI-8514L (available from Kusumoto Chemicals, Ltd.); and Alfon (trademark) UC-3000, UF-5022, UG-4010, UG-4035, and UG-4070 (available from Toagosei Co., Ltd.).

A method for dispersing the near-infrared ray absorbing particles into the liquid medium is not particularly limited if the method is capable of dispersing the near-infrared ray absorbing particles into the liquid medium. In this case, it is preferable that the near-infrared ray absorbing particles can be dispersed such that an average particle diameter thereof is 800 nm or less, and more preferably from 1 nm to 800 nm.

Examples of the method for dispersing the near-infrared ray absorbing particles into the liquid medium include a dispersion method using an apparatus such as a bead mill, a ball mill, a sand mill, a paint shaker, or an ultrasonic homogenizer. Among these, a media-agitating mill such as a bead mill, a ball mill, a sand mill, or a paint shaker that uses grinding media (e.g., beads, balls, or Ottawa sand) is preferable for grinding and dispersion from the viewpoint of shortening the time to obtain a desired average particle diameter. By performing a grinding-dispersion using the media-agitating mill, dispersion of the near-infrared ray absorbing particles into the liquid medium and size reduction of the near-infrared ray absorbing particles simultaneously proceed due to collisions between the near-infrared ray absorbing particles and collisions between the near-infrared ray absorbing particles and the grinding media. As a result, the near-infrared ray absorbing particles can be further micronized and uniformly dispersed. In other words, a grinding-dispersion is performed.

As described above, the average particle diameter of the near-infrared ray absorbing particles is preferably from 1 nm to 800 nm. This is because, as the average particle diameter of the complex tungsten oxide particles decreases, scattering of light in the visible light region due to geometric scattering or Mie scattering is reduced. In addition, particularly high transparency can be obtained in a near-infrared ray absorbing particle dispersion in which the near-infrared ray absorbing particles are dispersed in a solid medium such as a resin. The near-infrared ray absorbing particles are obtained by using the near-infrared ray absorbing particle dispersion liquid of the present embodiment. That is, when the average particle diameter is 200 nm or less, light scattering due to geometric scattering or Mie scattering is weakened, and Rayleigh scattering becomes dominant. In the Rayleigh scattering regime, the intensity of scattered light decreases in proportion to the sixth power of the dispersed particle diameter. Therefore, as the average particle diameter decreases, light scattering is reduced, thereby improving transparency. When the average particle diameter is 100 nm or less, scattered light becomes extremely small, which is preferable. It is further preferable that the average particle diameter be 30 nm or less.

The dispersion state of the near-infrared ray absorbing particles in the near-infrared ray absorbing particle dispersion, in which the near-infrared ray absorbing particles are obtained by using the near-infrared ray absorbing particle dispersion liquid of the present embodiment, can be equivalent to the dispersion state of the near-infrared ray absorbing particles in the dispersion liquid, if a known method for adding the dispersion liquid to a solid medium is employed. That is, the near-infrared ray absorbing particles in the near-infrared ray absorbing particle dispersion do not aggregate relative to the near-infrared ray absorbing particles in the near-infrared ray absorbing particle dispersion liquid, and the average particle diameter can be maintained at an equivalent level.

When the average particle diameter of the near-infrared ray absorbing particles is from 1 nm to 800 nm, transparency of a near-infrared ray absorbing particle dispersion to be produced and a molded article thereof (e.g., a plate or a sheet) can be particularly enhanced.

The near-infrared ray absorbing particle content in the near-infrared ray absorbing particle dispersion liquid of the present embodiment is not particularly limited, but is preferably, for example, 0.01 mass% to 80 mass%. This is because when the near-infrared ray absorbing particle content is 0.01 mass% or more, sufficient solar radiation shielding properties can be exhibited, that is, solar radiation transmittance can be sufficiently suppressed. When the near-infrared ray absorbing particle content is 80 mass% or less, the near-infrared ray absorbing particles can be uniformly dispersed in a dispersion medium.

Since the near-infrared ray absorbing particle dispersion liquid of the present embodiment contains the above-described complex tungsten oxide particles, the near-infrared ray absorbing particle dispersion liquid can have excellent visible light transmittance and near-infrared ray shielding properties. The near-infrared ray absorbing particle dispersion liquid of the present embodiment exhibits an excellent near-infrared ray shielding effect, in which a bottom transmittance in a near-infrared region can be reduced to 5% or less even when a peak transmittance is set to 75% or more in a wavelength region from 500 nm to 600 nm. According to the near-infrared ray absorbing particle dispersion liquid of the present embodiment, a transmittance of 50% or more at a wavelength of 700 nm and a transmittance of 30% or more at a wavelength of 800 nm can be achieved. Therefore, according to the near-infrared ray absorbing particle dispersion liquid of the present embodiment, it is possible to suppress solar radiation transmittance while ensuring a more neutral transmitted color tone and ensuring transmittance at sensor wavelengths.

[Near-Infrared Ray Absorbing Particle Dispersion]

Next, a configuration example of the near-infrared ray absorbing particle dispersion according to the present embodiment will be described.

The near-infrared ray absorbing particle dispersion of the present embodiment includes near-infrared ray absorbing particles and a solid medium. The near-infrared ray absorbing particles may be the above-described complex tungsten oxide particles.

Specifically, for example, as schematically illustrated in FIG. 4, a near-infrared ray absorbing particle dispersion 40 of the present embodiment may include near-infrared ray absorbing particles 41, which are the above-described complex tungsten oxide particles, and a solid medium 42. The near-infrared ray absorbing particles 41 are arranged in the solid medium 42. The near-infrared ray absorbing particle dispersion of the present embodiment preferably has a configuration in which the near-infrared ray absorbing particles are dispersed in the solid medium.

FIG. 4 is a schematic illustration, and the near-infrared ray absorbing particle dispersion of the present embodiment is not limited to the illustrated configuration. For example, although the near-infrared ray absorbing particles 41 are represented by circles and illustrated as spherical particles in FIG. 4, the shape of the near-infrared ray absorbing particles 41 is not limited thereto and may be any shape. The near-infrared ray absorbing particles 41 may have, for example, a coating on surfaces thereof. In addition to the near-infrared ray absorbing particles 41 and the solid medium 42, the near-infrared ray absorbing particle dispersion 40 may further include an additional additive as necessary.

Hereinafter, the near-infrared ray absorbing particle dispersion according to the present embodiment will be described in the order of (1) properties of the solid medium and the near-infrared ray absorbing particle dispersion, (2) a method for producing the near-infrared ray absorbing particle dispersion, (3) additives, and (4) application examples.

(1) Properties of the Solid Medium and the Near-Infrared Ray Absorbing Particle Dispersion

Examples of the solid medium include medium resins such as a thermoplastic resin, a thermosetting resin, and an ultraviolet curing resin. That is, a solid medium is preferably a resin.

The specific material of the resin for the solid medium is not particularly limited, but is preferably one resin selected from the resin group consisting of a polyester resin, a polycarbonate resin, an acrylic resin, a styrene resin, a polyamide resin, a polyethylene resin, a vinyl chloride resin, an olefin resin, an epoxy resin, a polyimide resin, a fluororesin, a ethylene-vinyl acetate copolymer, a polyvinyl acetal resin, and an ultraviolet curing resin, or a mixture of two or more resins selected from the resin group. Note that the polyester resin is preferably a polyethylene terephthalate resin.

These medium resins may also contain a polymeric dispersant having at least one functional group selected from an amine-containing group, a hydroxyl group, a carboxyl group, and an epoxy group in the main chain.

The solid medium is not limited to a medium resin, and a binder containing a metal alkoxide may also be used as the solid medium. Typical examples of the metal alkoxide include alkoxides of Si, Ti, Al, and Zr. By hydrolyzing and polycondensing a binder containing such metal alkoxide by heating or the like, it is also possible to obtain a near-infrared ray absorbing particle dispersion in which the solid medium contains an oxide.

The near-infrared ray absorbing particle content in the near-infrared ray absorbing particle dispersion of the present embodiment is not particularly limited, but is preferably, for example, 0.001 mass% to 80 mass% based on the near-infrared ray absorbing particle dispersion.

The shape of the near-infrared ray absorbing particle dispersion of the present embodiment is also not particularly limited, but the near-infrared ray absorbing particle dispersion is preferably formed into a sheet, a board, or a film. This is because the near-infrared ray absorbing particle dispersion can be applied to various applications when formed into a sheet, a board, or a film.

Since the near-infrared ray absorbing particle dispersion of the present embodiment contains the above-described complex tungsten oxide particles, the near-infrared ray absorbing particle dispersion can have excellent visible light transmittance and near-infrared ray shielding properties. The near-infrared ray absorbing particle dispersion of the present embodiment exhibits an excellent near-infrared ray shielding effect, in which a bottom transmittance in a near-infrared region can be reduced to 5% or less even when a peak transmittance is set to 75% or more in a wavelength region from 500 nm to 600 nm. According to the near-infrared ray absorbing particle dispersion of the present embodiment, a transmittance of 50% or more at a wavelength of 700 nm and a transmittance of 30% or more at a wavelength of 800 nm can be achieved. Therefore, according to the near-infrared ray absorbing particle dispersion of the present embodiment, it is possible to suppress solar radiation transmittance while ensuring a more neutral transmitted color tone and ensuring transmittance at sensor wavelengths.

(2) Method for Producing Near-Infrared Ray Absorbing Particle Dispersion

A method for producing the near-infrared ray absorbing particle dispersion of the present embodiment will be described below. Here, merely an example configuration of the method for producing the near-infrared ray absorbing particle dispersion is described, and the method for producing the near-infrared ray absorbing particle dispersion according to an aspect of the present disclosure is not limited to the following example configuration.

The near-infrared ray absorbing particle dispersion of the present embodiment can be produced using, for example, a masterbatch. In this case, the method for producing the near-infrared ray absorbing particle dispersion according to the present embodiment may include, for example, the following masterbatch preparation step.

In the masterbatch preparation step, a masterbatch in which near-infrared ray absorbing particles are dispersed in a solid medium can be prepared.

A specific method for producing the masterbatch is not particularly limited. For example, the masterbatch can be produced by dispersing a near-infrared ray absorbing particle dispersion liquid or near-infrared ray absorbing particles in a solid medium and pelletizing the solid medium.

The near-infrared ray absorbing particles may be a near-infrared ray absorbing particle dispersion powder obtained by removing a liquid medium from a near-infrared ray absorbing particle dispersion liquid.

For example, a mixture is prepared by uniformly mixing a near-infrared ray absorbing particle dispersion liquid, near-infrared ray absorbing particles, or a near-infrared ray absorbing particle dispersion powder with a powder or pellets of a solid medium and, as necessary, an additional additive. The mixture is then kneaded using a vent-type single-screw or twin-screw extruder, and processed into pellets by cutting melt-extruded strands to produce a masterbatch. In this case, the pellets may have a cylindrical shape or a prismatic shape. In addition, to produce the pellets, a so-called hot-cutting method in which the melt-extruded material is directly cut may be adopted. In this case, the pellets generally have a substantially spherical shape.

When a near-infrared ray absorbing particle dispersion liquid is used as a source material in the masterbatch preparation step, it is preferable to decrease or remove a liquid medium derived from the near-infrared ray absorbing particle dispersion liquid. In this case, the degree to which the liquid medium contained in the near-infrared ray absorbing particle dispersion liquid is removed is not particularly limited. For example, the liquid medium is preferably removed from the near-infrared ray absorbing particle dispersion liquid or the like to a degree permitted to remain in the masterbatch. When the liquid medium is a liquid plasticizer, the entire amount of the liquid plasticizer may remain in the near-infrared ray absorbing particle dispersion.

The method for decreasing or removing the liquid medium contained in the near-infrared ray absorbing particle dispersion liquid from the near-infrared ray absorbing particle dispersion liquid or from a mixture of the near-infrared ray absorbing particle dispersion liquid and the solid medium is not particularly limited.

For example, it is preferable to perform a drying step of drying the near-infrared ray absorbing particle dispersion liquid or the like under reduced pressure. Specifically, the near-infrared ray absorbing particle dispersion liquid or the like is dried under reduced pressure while being stirred, thereby separating a composition containing the near-infrared ray absorbing particles from components of the liquid medium. An apparatus used for the drying under reduced pressure may be a vacuum agitation-type dryer, but is not particularly limited if the apparatus has the above-described function. A value of the pressure for the reduced pressure during the drying step is selected as appropriate.

Such drying under reduced pressure improves the removal efficiency of the liquid medium or the like derived from the near-infrared ray absorbing particle dispersion liquid. Moreover, since the near-infrared ray absorbing particle dispersion powder obtained after the drying under reduced pressure and the near-infrared ray absorbing particle dispersion liquid used as a source material are not exposed to high temperatures for a long period of time, aggregation of the near-infrared ray absorbing particles in the near-infrared ray absorbing particle dispersion powder and the near-infrared ray absorbing particle dispersion liquid is suppressed, which is preferable. Furthermore, productivity of the near-infrared ray absorbing particle dispersion powder and the like is improved, and evaporated solvents such as the liquid medium can be easily recovered, which is also preferable from an environmental viewpoint.

In the near-infrared ray absorbing particle dispersion powder or the like obtained after the drying step, it is preferable to sufficiently remove solvent components having a boiling point of 120°C or less. For example, the residual amount of such solvent components is preferably 2.5 mass% or less. When the residual solvent components are 2.5 mass% or less, bubbles are not generated when the near-infrared ray absorbing particle dispersion powder or the like is processed into, for example, a near-infrared ray absorbing particle dispersion, and good appearance and optical properties are retained. Moreover, when the residual solvent components in the near-infrared ray absorbing particle dispersion powder are 2.5 mass% or less, aggregation of the near-infrared ray absorbing particles due to evaporation of the residual solvent components does not occur even when the powder is stored for a long period of time, thereby retaining long-term stability.

The dispersion concentration of the near-infrared ray absorbing particles can be adjusted by adding a solid medium to the obtained masterbatch and kneading, while maintaining the dispersion state of the near-infrared ray absorbing particles contained in the masterbatch which is a near-infrared ray absorbing particle dispersion.

Further, the method for producing the near-infrared ray absorbing particle dispersion according to the present embodiment may optionally include a molding step of molding the obtained master batch or the master batch to which the solid medium is added as described above to form the near-infrared ray absorbing particle dispersion having a desired shape.

A specific method for molding the near-infrared ray absorbing particle dispersion is not particularly limited, but may be, for example, a known method such as extrusion molding or injection molding.

In the molding step, for example, the near-infrared ray absorbing particle dispersion is formed into a flat or curved sheet, board, or film. A method for molding the near-infrared ray absorbing particle dispersion into a sheet, a board, or a film is not particularly limited, and various known methods can be adopted. For example, calendering, extrusion, casting, inflation, or the like may be adopted.

The method for producing the near-infrared ray absorbing particle dispersion according to the present embodiment is not limited to a mode including the above-described masterbatch preparation step.

For example, the method for producing the near-infrared ray absorbing particle dispersion according to the present embodiment may be a mode including the following precursor liquid preparation step and near-infrared ray absorbing particle dispersion preparation step.

In the precursor liquid preparation step, a near-infrared ray absorbing particle dispersion precursor liquid can be prepared by mixing near-infrared ray absorbing particles, a near-infrared ray absorbing particle dispersion powder, or a near-infrared ray absorbing particle dispersion liquid with one or more solid medium precursors selected from monomers of a solid medium, oligomers of a solid medium, and an uncured liquid solid medium.

In the near-infrared ray absorbing particle dispersion preparation step, a near-infrared ray absorbing particle dispersion can be prepared by curing the above-mentioned monomers of a solid medium precursor or the like through a chemical reaction such as condensation or polymerization.

For example, when the solid medium is an acrylic resin, a near-infrared ray absorbing particle dispersion precursor liquid can be obtained by mixing an acrylic monomer or an acrylic ultraviolet-curable resin with near-infrared ray absorbing particles.

Then, the near-infrared ray absorbing particle dispersion precursor liquid is filled into a predetermined mold or the like and subjected to radical polymerization to obtain a near-infrared ray absorbing particle dispersion using an acrylic resin.

When the solid medium is a resin that is cured by crosslinking, a near-infrared ray absorbing particle dispersion can also be obtained by subjecting the near-infrared ray absorbing particle dispersion precursor liquid to a crosslinking reaction, in the same manner as in the case where the solid medium is an acrylic resin.

(3) Additives

When the solid medium is a resin, the near-infrared ray absorbing particle dispersion of the present embodiment may contain known additives such as a plasticizer, a flame retardant, a coloring inhibitor, a filler, or the like, which are usually added to resins. However, as described above, the solid medium is not limited to a resin, and may be a binder containing a metal alkoxide.

The shape of the near-infrared ray absorbing particle dispersion of the present embodiment is not particularly limited, but the near-infrared ray absorbing particle dispersion may be formed into a sheet, a board, or a film as described above.

When a sheet, a board, or a film of the near-infrared ray absorbing particle dispersion is used as an interlayer of a transparent substrate such as laminated glass, the solid medium contained in the near-infrared ray absorbing particle dispersion does not sufficiently exhibit sufficient flexibility or adhesion to the transparent substrate in some cases. In this case, the near-infrared ray absorbing particle dispersion preferably contains a plasticizer. Specifically, for example, when the solid medium is a polyvinyl acetal resin and the dispersion is used as the above-described interlayer of a transparent substrate, the near-infrared ray absorbing particle dispersion preferably further contains a plasticizer.

The plasticizer may be any substance that can be used as a plasticizer for the solid medium used in the near-infrared ray absorbing particle dispersion of the present embodiment. For example, when a polyvinyl acetal resin is used as the solid medium of the near-infrared ray absorbing particle dispersion, examples of applicable plasticizers include ester plasticizers such as compounds of a monohydric alcohol and an organic acid and ester compounds of a polyhydric alcohol and an organic acid, as well as phosphate plasticizers such as organophosphate plasticizers. Each of these plasticizers is preferably liquid at room temperature. Among them, ester compounds synthesized from a polyhydric alcohol and a fatty acid are particularly preferable plasticizers.

(4) Application Examples

The near-infrared ray absorbing particle dispersion of the present embodiment can be used in various modes, and the use and application mode are not particularly limited. Hereinafter, a near-infrared ray absorbing interlayer, a near-infrared ray absorbing laminate, and a near-infrared ray absorbing transparent substrate will be described as application examples of the near-infrared ray absorbing particle dispersion of the present embodiment will be described.

(4-1) Near-Infrared Absorbing Interlayer and Near-Infrared Ray Absorbing Laminate

The near-infrared ray absorbing laminate of the present embodiment may have a laminated structure including the above-described near-infrared ray absorbing particle dispersion and a transparent substrate. The near-infrared ray absorbing laminate of the present embodiment can be a laminate including the above-described near-infrared ray absorbing particle dispersion and a transparent substrate as laminated components.

The near-infrared ray absorbing laminate may be, for example, a laminate including two or more transparent substrates and the above-described near-infrared ray absorbing particle dispersion. In this case, the near-infrared ray absorbing particle dispersion may be, for example, disposed between the transparent substrates and used as a near-infrared ray absorbing intermediate film.

In this case, as illustrated in FIG. 5, which is a schematic cross-sectional view taken along a lamination direction of a transparent substrate and a near-infrared ray absorbing particle dispersion, a near-infrared ray absorbing laminate 50 may include a plurality of transparent substrates 521 and 522 and a near-infrared ray absorbing particle dispersion 51. The near-infrared ray absorbing particle dispersion 51 may be disposed between the plurality of transparent substrates 521 and 522. Although FIG. 5 illustrates an example including two transparent substrates 521 and 522, the present invention is not limited to this configuration.

The near-infrared ray absorbing particle dispersion serving as a near-infrared ray absorbing interlayer is preferably formed into a sheet, a board, or a film.

The transparent substrate is preferably formed into one or more shapes selected from a glass plate transparent in a visible light region, a plastic plate, and a plastic film.

When the transparent substrate is plastic, the type of plastic is not particularly limited and may be selected depending on the intended application. For example, the transparent substrate may be one or more plastics selected from a polycarbonate resin, an acrylic resin, a polyester resin, a polyamide resin, a vinyl chloride resin, an olefin resin, an epoxy resin, a polyimide resin, an ionomer resin, and a fluororesin. Note that the polyester resin is preferably a polyethylene terephthalate resin.

The transparent substrate may contain particles having a solar radiation shielding function. The particles having a solar radiation shielding function may be near-infrared ray absorbing particles having near-infrared ray shielding properties.

By interposing the above-described near-infrared ray absorbing particle dispersion as an interlayer component between a plurality of transparent substrates, a solar radiation shielding laminated structure, which is a type of near-infrared ray absorbing laminate having excellent visible light transmittance and near-infrared ray shielding properties, can be obtained. In addition, when the above-described near-infrared ray absorbing particle dispersion is used, even when a peak transmittance in a wavelength region of 500 nm to 600 nm is set to 75% or more, it is possible to achieve a transmittance of 50% or more at a wavelength of 700 nm and a transmittance of 30% or more at a wavelength of 800 nm. Accordingly, it is possible to obtain a solar radiation shielding laminated structure, which is a type of near-infrared ray absorbing laminate capable of suppressing solar transmittance while providing a more neutral transmitted color tone and ensuring transmittance at sensor wavelengths.

In addition, a plurality of transparent substrates facing each other with a near-infrared ray absorbing particle dispersion interposed therebetween may be bonded together and integrated by a known method, thereby forming the above-described near-infrared ray absorbing laminate.

When the above-described near-infrared ray absorbing particle dispersion is used as a near-infrared ray absorbing interlayer, a solid medium described for the near-infrared ray absorbing particle dispersion may be used. However, from the viewpoint of enhancing adhesion strength between the near-infrared ray absorbing interlayer and the transparent substrate, the solid medium is preferably a polyvinyl acetal resin.

The near-infrared ray absorbing interlayer of the present embodiment can be produced by the above-described method for producing the near-infrared ray absorbing particle dispersion and may be formed into a sheet, a board, or a film.

When the near-infrared ray absorbing interlayer does not sufficiently exhibit flexibility or adhesion to the transparent substrate, it is preferable to add a liquid plasticizer for a medium resin, which is the solid medium. For example, when the medium resin used for the near-infrared ray absorbing interlayer is a polyvinyl acetal resin, addition of a liquid plasticizer for a polyvinyl acetal resin is beneficial for improving adhesion to the transparent substrate.

The plasticizer may be any substance that can be used as a plasticizer for the solid medium. For example, when a polyvinyl acetal resin is used as the solid medium of the near-infrared ray absorbing particle dispersion, examples of applicable plasticizers include ester plasticizers such as compounds of a monohydric alcohol and an organic acid and ester compounds of a polyhydric alcohol and an organic acid, as well as phosphate plasticizers such as organophosphate plasticizers. Each of these plasticizers is preferably liquid at room temperature. Among them, ester compounds synthesized from a polyhydric alcohol and a fatty acid are particularly preferable plasticizers.

In addition, at least one additive selected from the group consisting of a silane coupling agent, a metal salt of a carboxylic acid, a metal hydroxide, and a metal carbonate may be added to the near-infrared ray absorbing interlayer. The metal constituting the metal salt of a carboxylic acid, the metal hydroxide, or the metal carbonate is not particularly limited, but is preferably at least one metal selected from sodium, potassium, magnesium, calcium, manganese, cesium, lithium, rubidium, and zinc. In the near-infrared ray absorbing interlayer, the proportion of at least one selected from the group consisting of a metal salt of a carboxylic acid, a metal hydroxide, and a metal carbonate is preferably 1 mass% or more and 100 mass% or less relative to the near-infrared ray absorbing particles.

Furthermore, the near-infrared ray absorbing interlayer may optionally contain, in addition to the near-infrared ray absorbing particles, at least one type of particles selected from oxide particles, complex oxide particles, and boride particles, each containing one or more elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Yb, Lu, Sr, and Ca. The near-infrared ray absorbing interlayer may contain such particles in an amount ranging from 5 mass% to 95 mass%, based on a total amount of 100 mass% of the near-infrared ray absorbing particles and the additional particles.

In the near-infrared ray absorbing laminate, at least one interlayer disposed between the transparent substrates may contain an ultraviolet absorber. Examples of the ultraviolet absorber include one or more compounds selected from a compound having a malonic acid ester structure, a compound having an oxanilide structure, a compound having a benzotriazole structure, a compound having a benzophenone structure, a compound having a triazine structure, a compound having a benzoate structure, and a compound having a hindered amine structure.

The interlayer of the near-infrared ray absorbing laminate may, of course, be constituted solely by the near-infrared ray absorbing interlayer according to the present embodiment.

The near-infrared ray absorbing interlayer described herein is an embodiment of a near-infrared ray absorbing particle dispersion. The near-infrared ray absorbing particle dispersion according to the present embodiment can, of course, be used without being interposed between two or more transparent substrates that transmit visible light. That is, the near-infrared ray absorbing particle dispersion according to the present embodiment can function independently as a near-infrared ray absorbing particle dispersion.

The near-infrared ray absorbing laminate according to the present embodiment is not limited to the above-described configuration in which the near-infrared ray absorbing particle dispersion is disposed between transparent substrates, and may employ any configuration if the laminate has a laminated structure including a near-infrared ray absorbing particle dispersion and a transparent substrate.

(4-2) Near-Infrared Ray Absorbing Transparent Substrate

The near-infrared ray absorbing transparent substrate of the present embodiment includes a transparent substrate and a near-infrared ray absorbing layer disposed on at least one surface of the transparent substrate, and the near-infrared ray absorbing layer may be the above-described near-infrared ray absorbing particle dispersion.

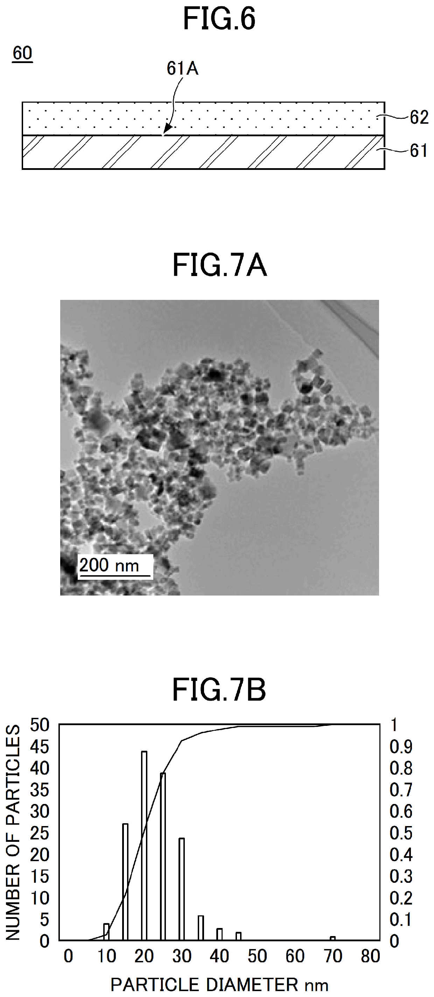

Specifically, as illustrated in FIG. 6, which is a schematic cross-sectional view taken along a lamination direction of a transparent substrate and a near-infrared ray absorbing layer, a near-infrared ray absorbing transparent substrate 60 may include a transparent substrate 61 and a near-infrared ray absorbing layer 62. The near-infrared ray absorbing layer 62 may be disposed on at least one surface 61A of the transparent substrate 61.

The near-infrared ray absorbing transparent substrate of the present embodiment may include a transparent substrate as described above. The transparent substrate is preferably, for example, one or more substrates selected from a transparent film substrate and a transparent glass substrate.

The film substrate is not limited to be in a form of film, and may be, for example, in a form of board or in a form of sheet. A material of the film substrate is preferably one or more materials selected from a polyester resin, an acrylic resin, a urethane resin, a polycarbonate resin, a polyethylene resin, an ethylene-vinyl acetate copolymer, a vinyl chloride resin, and a fluororesin depending on the intended purpose. Among these, the material of the film substrate is preferably a polyester resin, and more preferably a polyethylene terephthalate resin (PET resin). That is, the film substrate is preferably a polyester resin film, and more preferably a polyethylene terephthalate resin film.

When the transparent substrate is a film substrate, a surface of the film substrate is preferably subjected to a surface treatment in order to facilitate adhesion to the near-infrared ray absorbing layer.

In addition, in order to improve adhesion between a glass substrate or a film substrate and the near-infrared ray absorbing layer, it is preferable that an interlayer be formed on the glass substrate or the film substrate, and the near-infrared ray absorbing layer be formed on the interlayer. The configuration of the interlayer is not particularly limited, and the interlayer may be formed of, for example, a polymer film, a metal layer, an inorganic layer (e.g., an inorganic oxide layer of silica, titania, or zirconia), or an organic/inorganic composite layer.

Since the near-infrared ray absorbing particle dispersion has been described above, description thereof is omitted here. The shape of the near-infrared ray absorbing particle dispersion of the present embodiment is not particularly limited, but the near-infrared ray absorbing particle dispersion is preferably formed into, for example, a sheet, a board, or a film.

A method for producing the near-infrared ray absorbing transparent substrate of the present embodiment will be described.

The near-infrared ray absorbing transparent substrate of the present embodiment can be produced, for example, by forming, on a transparent substrate, a near-infrared ray absorbing layer that is a near-infrared ray absorbing particle dispersion in which near-infrared ray absorbing particles are dispersed in a solid medium, by using the above-described near-infrared ray absorbing particle dispersion liquid.

Therefore, the method for producing the near-infrared ray absorbing transparent substrate of the present embodiment may include, for example, the following coating step and near-infrared ray absorbing layer forming step.

In the coating step, a coating liquid containing the above-described near-infrared ray absorbing particle dispersion liquid is applied to a surface of the transparent substrate.

In the near-infrared ray absorbing layer forming step, after a liquid medium in the coating liquid is evaporated, a near-infrared ray absorbing layer is formed.

The coating liquid used in the coating step can be prepared, for example, by adding and mixing a solid medium such as a resin or a metal alkoxide, or a solid medium precursor, with the above-described near-infrared ray absorbing particle dispersion liquid.

As described above, the solid medium precursor refers to one or more solid medium precursors selected from monomers of a solid medium, oligomers of a solid medium, and an uncured liquid solid medium.

When a near-infrared ray absorbing layer, which is a coating film, is formed on the transparent substrate, the near-infrared ray absorbing layer is in a state in which near-infrared ray absorbing particles are dispersed in a solid medium. Therefore, the near-infrared ray absorbing layer constitutes a near-infrared ray absorbing particle dispersion. In this manner, by providing the near-infrared ray absorbing particle dispersion on a surface of the transparent substrate, the near-infrared ray absorbing transparent substrate can be produced.

Since the solid medium and the solid medium precursor have been described in (1) properties of the solid medium and the near-infrared ray absorbing particle dispersion and (2) the method for producing the near-infrared ray absorbing particle dispersion, description thereof is omitted here.

A method for applying the coating liquid onto the transparent substrate in order to provide the near-infrared ray absorbing layer on the transparent substrate is not particularly limited, if the method is capable of uniformly applying the coating liquid onto a surface of the transparent substrate. Examples of such a method include bar coating, gravure coating, spray coating, dip coating, spin coating, screen printing, roll coating, and casting.

Here, a procedure for forming a near-infrared ray absorbing layer on a surface of a transparent substrate will be described by way of example in which the solid medium is an ultraviolet-curable resin, and the coating liquid is applied by bar coating to form the near-infrared ray absorbing layer.

A coating liquid whose concentration and additives are adjusted as appropriate to provide suitable leveling properties is applied onto a transparent substrate using a wire bar having a bar number capable of satisfying the intended thickness of the near-infrared ray absorbing layer and the intended amount of the near-infrared ray absorbing particles. Then, after solvents such as a liquid medium contained in the coating liquid are removed by drying, the solid medium is irradiated with ultraviolet light and cured, thereby forming a coating layer serving as the near-infrared ray absorbing layer on the transparent substrate.

The drying conditions for the coating film vary depending on the components, the type of solvent, and the amount used, but the drying can generally be carried out under conditions at a temperature of 60°C to 140°C for a period of 20 seconds to 10 minutes. Ultraviolet irradiation is not particularly limited, and for example, an ultraviolet exposure apparatus such as an ultra-high-pressure mercury lamp may be suitably used.

In addition, by performing steps before and after the near-infrared ray absorbing layer is formed (a pre-step and a post-step), it is also possible to control adhesion between the substrate and the near-infrared ray absorbing layer, smoothness of the coating film after being applied, and drying properties of an organic solvent. Examples of the pre-step and the post-step include a substrate-surface treatment step, a pre-bake step (pre-heating of the substrate), and a post-bake step (post-heating of the substrate), which may be selected as appropriate. The heating temperature in the pre-bake step or the post-bake step is preferably from 80°C to 200°C, and the heating time is preferably from 30 seconds to 240 seconds.

A method for producing the near-infrared ray absorbing transparent substrate of the present embodiment is not limited to the above-described method. Another configuration example of the method for producing the near-infrared ray absorbing transparent substrate of the present embodiment is a mode including the following near-infrared ray absorbing particle dispersion liquid coating and drying step and binder coating and curing step.

In the near-infrared ray absorbing particle dispersion liquid coating and drying step, the above-described near-infrared ray absorbing particle dispersion liquid is applied onto a surface of a transparent substrate and dried.

In the binder coating and curing step, a binder containing a solid medium such as a resin or a metal alkoxide, or a solid medium precursor, is applied onto a surface, on which a near-infrared ray absorbing particle dispersion liquid has been applied, and is then cured.

In this case, by the near-infrared ray absorbing particle dispersion liquid coasting and drying step, a film in which near-infrared ray absorbing particles are dispersed is formed on the surface of the transparent substrate. Note that the near-infrared ray absorbing particle dispersion liquid can be applied by the same method as that described for the coating step in the above-described method for producing the near-infrared ray absorbing transparent substrate.

Then, by applying and curing the binder on the film in which the near-infrared ray absorbing particles are dispersed, the cured binder is disposed between the near-infrared ray absorbing particles, and thus a near-infrared ray absorbing layer can be formed.

The near-infrared ray absorbing transparent substrate may further have a coating layer on the surface of the near-infrared ray absorbing particle dispersion. That is, the substrate may have a multilayer structure.

The coating layer may be, for example, a coating film of an oxide containing one or more elements selected from Si, Ti, Zr, and Al. In this case, the coating layer can be formed, for example, by applying, onto the near-infrared ray absorbing layer, a coating liquid containing one or more materials selected from an alkoxide containing one or more elements of Si, Ti, Zr, and Al, and a partial hydrolysis-condensation polymer of such an alkoxide, followed by heating.

By providing the coating layer, the applied components fill gaps between deposited near-infrared ray absorbing particles of a first layer to form a film, thereby suppressing refraction of visible light. As a result, the haze value of the film can be further reduced and visible light transmittance can be improved. In addition, adhesion of the near-infrared ray absorbing particles to the substrate can be enhanced.

Here, a method for forming a coating film composed of an alkoxide containing one or more of Si, Ti, Zr, and Al, or a partial hydrolysis-condensation polymer thereof, on near-infrared ray absorbing particles alone or on a film containing near-infrared ray absorbing particles is preferably an application method from the viewpoints of ease of film formation and cost.

The coating liquid used in the above-described application method is preferably a coating liquid containing, in a solvent such as water or alcohol, one or more materials selected from an alkoxide containing one or more elements of Si, Ti, Zr, and Al, and a partial hydrolysis-condensation polymer of such an alkoxide. The amount of the alkoxide and the like contained in the coating liquid is not particularly limited, but is preferably, for example, 40 mass% or less expressed as an oxide in the coating obtained after heating. In addition, the pH can be adjusted by adding an acid or an alkali as necessary.

By applying the coating liquid as a second layer onto a film mainly composed of near-infrared ray absorbing particles, and heating the applied coating liquid, an oxide coating film containing one or more elements selected from Si, Ti, Zr, and Al, which serves as a coating layer, can be easily formed. An organosilazane solution is also preferably used as a binder component used in the coating liquid or as a component of the coating liquid.

The heating temperature for the substrate after application of a near-infrared ray absorbing particle dispersion liquid or a coating liquid containing a metal alkoxide containing one or more elements of Si, Ti, Zr, and Al, and a hydrolysis polymer thereof, is not particularly limited. For example, the heating temperature for the substrate is preferably 100°C or higher, and more preferably equal to or higher than the boiling point of the solvent contained in the applied liquid such as the near-infrared ray absorbing particle dispersion liquid.

This is because, when the heating temperature for the substrate is 100°C or higher, polymerization of the metal alkoxide or the hydrolysis polymer of such a metal alkoxide contained in the coating film can be completed. In addition, when the heating temperature for the substrate is 100°C or higher, water or an organic solvent used as the solvent hardly remains in the film. Therefore, in the film after heating, such solvents do not cause a reduction in visible light transmittance.

The thickness of the near-infrared ray absorbing layer on the transparent substrate of the near-infrared ray absorbing transparent substrate of the present embodiment is not particularly limited. However, from a practical viewpoint, the thickness is preferably 10 $\mu$m or less, and more preferably 6 $\mu$m or less. This is because, when the thickness of the near-infrared ray absorbing layer is 10 $\mu$m or less, sufficient pencil hardness is exhibited to provide abrasion resistance, and, during volatilization of the solvent and curing of the binder in the near-infrared ray absorbing layer, occurrence of process abnormalities such as warping of the substrate film can be avoided.

Examples

Specific examples will be described below. However, the present invention is not limited to these examples.

(1) Evaluation Methods

(1-1) Powder X-ray Diffraction Pattern

For complex tungsten oxide particles, a powder X-ray diffraction pattern (XRD pattern) was measured using a powder X-ray diffractometer (BRUKER D2 PHASER). CuK$\alpha$ radiation was used as the radiation source, and the measurement was performed at a tube voltage of 45 kV and a tube current of 40 mA.

(1-2) Transmitted Light Profile

The optical properties of the near-infrared ray absorbing particle dispersion liquid were evaluated by measuring a transmitted light profile at intervals of 5 nm over a wavelength range of 200 nm to 2600 nm using a spectrophotometer (U-4100, available from Hitachi, Ltd.).

(1-3) Composition Analysis

The proportion of each component contained in the complex tungsten oxide particles was evaluated by the following methods.

The mass fraction of Cs was determined as a mean value obtained by measuring each sample three times using a polarized Zeeman atomic absorption spectrophotometer (atomic absorption spectroscopy (AAS), model ZA3300, available from Hitachi High-Tech Corporation).

The mass fraction of W was determined as a mean value obtained by analyzing each sample three times using inductively coupled plasma optical emission spectroscopy (ICP-OES, model ICPE-9800, available from Shimadzu Corporation).

The mass fraction of O was determined as a mean value obtained by analyzing each sample three times using an oxygen/nitrogen/hydrogen analyzer (ON-836, available from LECO Japan Corp.) equipped with an infrared detector for oxygen detection (infrared absorption spectroscopy (IRS)).

[Example 1]

Complex tungsten oxide particles were produced and evaluated using the complex material producing apparatus 10 illustrated in FIG. 1 and the reduction apparatus 20 illustrated in FIG. 2. Specific conditions are described below.

The complex material producing apparatus 10 includes: the storage 11 containing a source material solution containing the element W source and the element M source; the two-fluid nozzle 12 configured to form droplets of the source material and also form a flame; and the reaction tube 13 connected to the filter 14 configured to collect the produced complex tungsten oxide particles.

The supply rate of the source material solution to the two-fluid nozzle 12 was set to 3 g/min. The flow rate of oxygen serving as a carrier gas was controlled by the ejector 15 and set to 15 L/min. The air flow rate in the ejector 15 was controlled to be within a range of 160 L/min to 180 L/min.

For formation of the flame by the two-fluid nozzle 12, propane gas and oxygen gas were used. The flow rate of propane gas was set to 1.2 L/min, and the flow rate of oxygen gas was set to 6.0 L/min.

A mixed solution was used as a source material, in which a solution obtained by dissolving $W(CO)_6$ as the element W source in THF (tetrahydrofuran) (a solution containing the element W source) and a solution obtained by dissolving cesium acetate as the element M source in ethanol (a solution containing the element M source) were mixed, and the mixed solution was stored in the storage 11. The mixed source material solution was prepared such that a ratio Cs/W, which is a ratio of the amount of substance of Cs serving as the M element to the amount of substance of tungsten (W), was 0.37.

From the storage 11, the source material solution and oxygen serving as a carrier gas were supplied to the two-fluid nozzle 12 to form an aerosol (aerosol forming step).

As described above, propane gas and oxygen gas were supplied to the two-fluid nozzle 12 to form a flame reaction field, and the formed aerosol was supplied into the flame and heated (heating step).

In the heating step, heating conditions were selected such that, when the complex tungsten oxide particles obtained after the heating step were subjected to a reduction step, complex tungsten oxide particles in which a $Cs_{0.33}WO_3$ phase was confirmed by X-ray diffraction were produced, and such that absorption curves in a molar extinction coefficient curve of a dispersion liquid and the like exhibited desired relationships. Specifically, the heating conditions were selected based on results of tests conducted in advance. In the heating step, the source material was heated at a temperature of 550°C or higher.

The complex tungsten oxide particles obtained in the heating step were introduced into the reaction tube 13. The cooling water pipe 131 is arranged around the reaction tube 13, and cooling water is circulated therethrough. The complex tungsten oxide particles introduced into the reaction tube 13 were collected by the filter 14 which is a bag filter.

An XRD pattern evaluation was performed on the complex tungsten oxide particles obtained after the heating step.

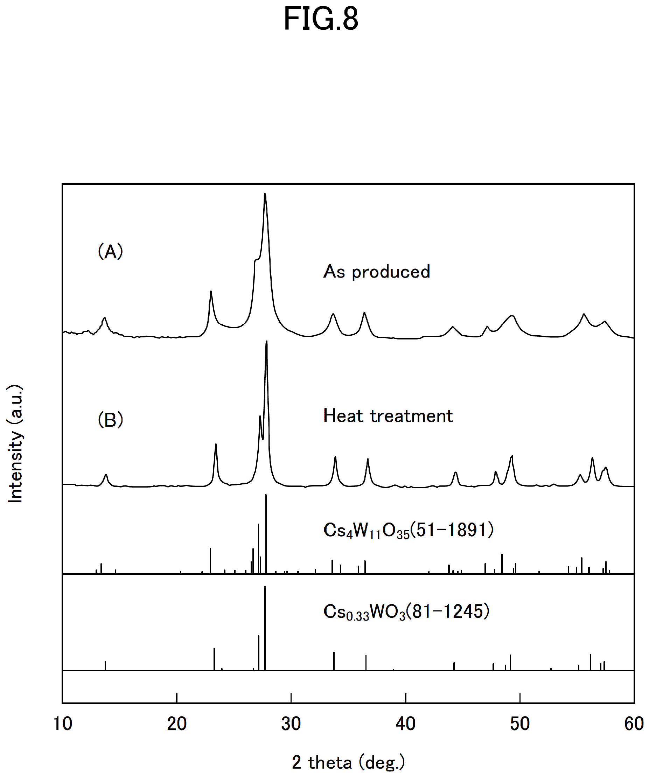

FIG. 8 shows an XRD pattern of the obtained complex tungsten oxide particles. In FIG. 8, an XRD pattern (A) indicated as "As produced" corresponds to the XRD pattern of the complex tungsten oxide particles after the heating step. The particles were identified as including a crystal phase composed of hexagonal $Cs_{0.33}WO_3$ (ICDD: 81-1245) or orthorhombic $Cs_4W_{11}O_{35}$ (ICDD: 51-1891), and a small amount of a cubic pyrochlore $(Cs_2O)_{0.44}W_2O_6$ phase (ICDD: 47-0566). Identification of the minor crystal phase was performed using Rietveld analysis.

Reduction was further performed using the reduction apparatus 20 illustrated in FIG. 2.

As illustrated in FIG. 2, reduction was performed under a gas stream of 3 vol% $H_2$/97 vol% Ar as follows: the heater 22 was provided around the reaction tube 21, and the temperature was raised from room temperature to 500°C; and after a portion where the container 23 was placed reached a reduction temperature, the temperature was maintained for 2 hours, followed by cooling to room temperature (reduction step). As a result, reduced particles, which are complex tungsten oxide particles according to Example 1, were obtained.

For the complex tungsten oxide particles after the heating step, FIG. 7A illustrates a TEM image, and FIG. 7B illustrates a particle size distribution.

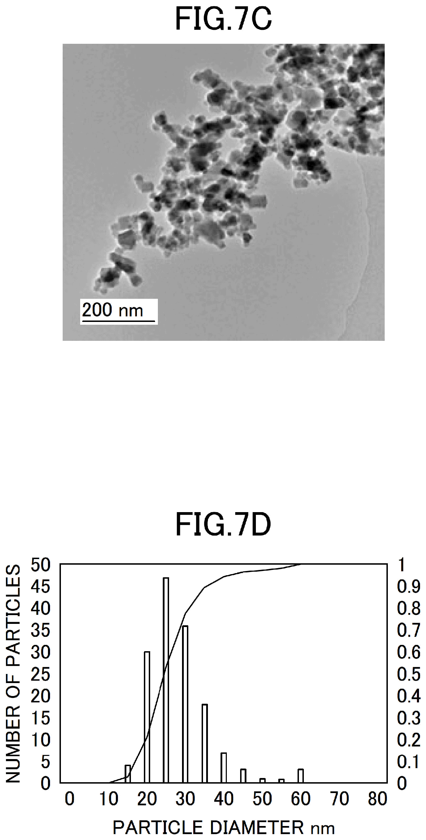

For the complex tungsten oxide particles after the reduction step, FIG. 7C illustrates a TEM image, and FIG. 7D illustrates a particle size distribution.

The particle size distribution of the complex tungsten oxide particles was calculated by observation using a transmission electron microscope in three fields of view. Specifically, images of a total of 600 to 700 complex tungsten oxide particles were observed in the three fields of view. Based on binarized data, an area of each particle was calculated, and an equivalent circle diameter was calculated for each particle.

FIG. 8 shows an XRD pattern of the obtained complex tungsten oxide particles. In FIG. 8, an XRD pattern (B) indicated as "Heat treated" corresponds to the XRD pattern of the complex tungsten oxide particles after the reduction step. The obtained XRD pattern included only diffraction peaks of $Cs_{0.33}WO_3$, and it was confirmed that the crystal system was hexagonal.

The above-described composition analysis was performed on the complex tungsten oxide particles of Example 1 after the reduction step, and a Cs/W ratio, which is a ratio of the amount of substance of cesium to the amount of substance of tungsten, was determined. As a result, it was confirmed that the Cs/W ratio decreased from 0.37 of the charged composition to 0.34. However, the value of 0.34 is 0.01 higher than the theoretical composition ratio of 0.33, and since the XRD pattern indicates a single phase, it is considered that Cs deficiency is substantially absent.

Further, composition analysis of the complex tungsten oxide particles confirmed that an O/W ratio, which is a ratio of the amount of substance of oxygen to the amount of substance of tungsten, was 2.841. In the following description, the complex tungsten oxide particles are described as $Cs_{0.33}WO_3$ in accordance with the evaluation based on the XRD pattern.

23 mass% of the complex tungsten oxide particles after the reduction step according to Example 1, 8 mass% of an acrylic polymer dispersant having a functional group containing an amine group (amine value: 48 mg KOH/g) (hereinafter referred to as a "dispersant a"), and 69 mass% of butyl acetate were weighed. The weighed materials were placed in a paint shaker together with zirconia beads having a diameter of 0.05 mm, and dispersion was performed for 100 minutes using the paint shaker to obtain a $Cs_{0.33}WO_3$ particle dispersion liquid, which is a near-infrared ray absorbing particle dispersion liquid according to Example 1.

The average particle diameter (measured by transmission electron microscopy) of the complex tungsten oxide particles in the obtained dispersion liquid according to Example 1 was 27.2 nm.

Note that the average particle diameter of the complex tungsten oxide particles was calculated by observation using a transmission electron microscope in three fields of view. Specifically, images of a total of 600 to 700 complex tungsten oxide particles were observed in the three fields of view. Based on binarized data, an area of each particle was calculated, and an equivalent circle diameter was calculated for each particle. The average particle diameter was defined as an arithmetic mean value of particle diameters, that is, equivalent circle diameters, of all the complex tungsten oxide particles evaluated.

A portion of the $Cs_{0.33}WO_3$ particle dispersion liquid according to Example 1 was collected, and the solvent was removed to obtain $Cs_{0.33}WO_3$ particles, which are complex tungsten oxide particles according to Example 1.

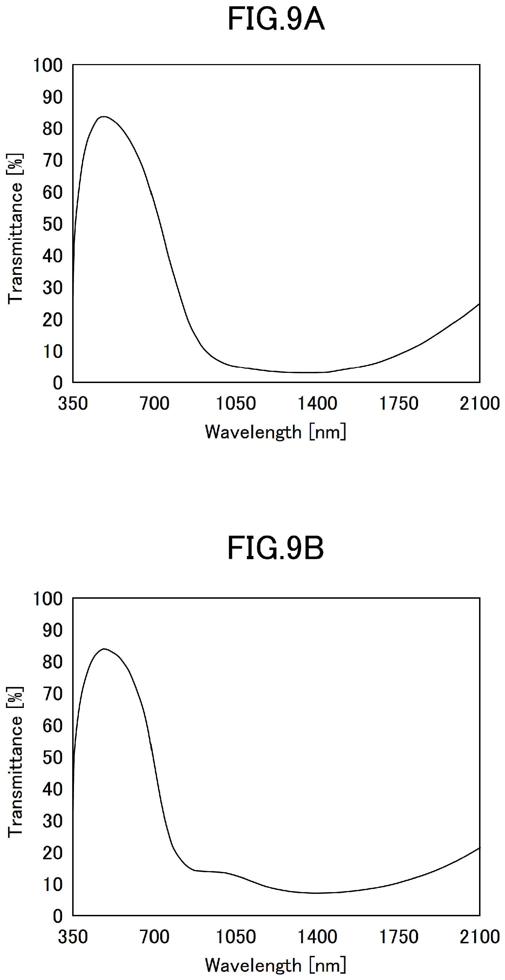

For optical properties of the near-infrared ray absorbing particle dispersion liquid according to Example 1, a transmitted light profile was measured under the conditions described above. The results of the transmitted light profile are illustrated in FIG. 9A, and transmittance at each wavelength is shown in Table 1.

A molar extinction coefficient curve was derived from an absorption curve obtained during measurement of the transmitted light profile of the near-infrared ray absorbing particle dispersion liquid according to Example 1. The molar extinction coefficient curve was separated, as described above, into three absorption component curves: an absorption curve of localized surface plasmon resonance in an orientation perpendicular to the c-axis (LSPR⊥), an absorption curve of localized surface plasmon resonance in an orientation parallel to the c-axis (LSPR∥), and an absorption curve of polaron absorption. The results are shown in FIG. 10A. In FIG. 10A, "exp." indicates a measured value, and "calc." indicates a summed value of the absorption curves of the three absorption components.

In FIG. 10A, "σ LSPR⊥c" indicates the absorption curve of localized surface plasmon resonance in the orientation perpendicular to the c-axis (LSPR⊥). In FIG. 10A, "σ LSPR∥c" indicates the absorption curve of localized surface plasmon resonance in the orientation parallel to the c-axis (LSPR∥). In FIG. 10A, "σ polaron" indicates the absorption curve of polaron absorption. The same notation is used in FIG. 10B, which shows evaluation results of Comparative Example 1.

[Comparative Example 1]

0.216 kg of $Cs_2CO_3$ was dissolved in 0.330 kg of water, and the obtained solution was added to 1.000 kg of $H_2WO_4$. After sufficient stirring, the mixture was dried to obtain a dried product.

Next, while 5 vol% H2 gas with $N_2$ gas serving as a carrier gas was supplied, the dried product was placed in an electric furnace and heated. Firing was performed at a temperature of 800°C for 1 hour. Thereafter, the supply gas was switched to $N_2$ gas only, and the temperature was lowered to room temperature to obtain a complex tungsten oxide coarse powder according to Comparative Example 1.

23 mass% of the obtained complex tungsten oxide coarse powder, 8 mass% of the dispersant a, and 69 mass% of butyl acetate were weighed. The weighed materials were placed in a paint shaker together with zirconia beads having a diameter of 0.3 mm, and dispersion was performed for 15 hours using the paint shaker to obtain a near-infrared ray absorbing particle dispersion liquid according to Comparative Example 1.

The average particle diameter (measured by transmission electron microscopy) of the complex tungsten oxide particles in the obtained dispersion liquid according to Comparative Example 1 was 25.1 nm. The average particle diameter was measured and calculated in accordance with the same procedure and conditions as those used in Example 1. A portion of the dispersion liquid according to Comparative Example 1 was collected, and the solvent was removed to obtain $Cs_{0.33}WO_3$ particles, which are complex tungsten oxide particles according to Comparative Example 1.

For optical properties of the near-infrared ray absorbing particle dispersion liquid according to Comparative Example 1, a transmitted light profile was measured under the conditions described above. The results of the transmitted light profile are illustrated in FIG. 9B, and transmittance at each wavelength is shown in Table 1.

A molar extinction coefficient curve was derived from an absorption curve obtained during measurement of the transmitted light profile of the near-infrared ray absorbing particle dispersion liquid according to Comparative Example 1. The molar extinction coefficient curve was separated, as described above, into three absorption component curves: an absorption curve of localized surface plasmon resonance in an orientation perpendicular to the c-axis (LSPR⊥), an absorption curve of localized surface plasmon resonance in an orientation parallel to the c-axis (LSPR∥), and an absorption curve of polaron absorption. The results are shown in FIG. 10B.

[Table 1]

| | TRANSMITTANCE AT WAVELENGTHS (%) | | | | | |
| --- | --- | --- | --- | --- | --- | --- |
| | 600nm | 700nm | 800nm | 900nm | 1000nm | 1100nm |
| EXAMPLE 1 | 76.72 | 74.54 | 33.31 | 13.82 | 6.76 | 4.69 |
| COMPARATIVE EXAMPLE 1 | 76.47 | 51.12 | 21.59 | 13.49 | 13.85 | 11.89 |

As shown in FIG. 9A, it was confirmed that, for the near-infrared ray absorbing particle dispersion liquid of Example 1, a bottom transmittance in a near-infrared region can be reduced to 5% or less even when a peak transmittance is set to 75% or more in a wavelength region from 500 nm to 600 nm.

In contrast, as shown in FIG. 9B, it was confirmed that, for the near-infrared ray absorbing particle dispersion liquid of Comparative Example 1, a bottom transmittance in a near-infrared region cannot be reduced to 5% or less when a peak transmittance is set to 75% or more in a wavelength region from 500 nm to 600 nm. Thus, the near-infrared ray shielding effect was inferior.

Further, from Table 1, it was confirmed that the transmittance at a wavelength of 700 nm of the near-infrared ray absorbing particle dispersion liquid of Example 1 was higher than the transmittance of the near-infrared ray absorbing particle dispersion liquid of Comparative Example 1 composed of complex tungsten oxide particles in the related art. That is, the near-infrared ray absorbing particle dispersion liquid of Example 1 transmits light on a longer-wavelength side within a visible light region (wavelengths of 380 nm to 780 nm). This indicates that the complex tungsten oxide particles of Example 1 also transmit red light around a wavelength of 800 nm, thereby contributing to improvement in color tone of the complex tungsten oxide particles.

Table 2 shows peak energy, peak wavelength, peak intensity, and integrated intensity of the absorption curves of the three absorption components in Example 1 and Comparative Example 1. Further, Table 3 shows proportion of integrated intensity of each of the re absorption curves of the three absorption components in the integrated intensity of the molar extinction coefficient curve.

[Table 2]

| | | PEAK ENERGY (eV) | PEAK WAVELENGTH (nm) | PEAK INTENSITY | INTEGRATED INTENSITY OF ABSORPTION |
|---|---|---|---|---|---|
| EXAMPLE 1 | ABSORPTION CURVE CORRESPONDING TO LOCALIZED SURFACE PLASMON RESONANCE IN ORIENTATION PERPENDICULAR TO c-AXIS (LSPR⊥) | 0.86 | 1435 | 2526.58 | 96015.38 |
| | ABSORPTION CURVE CORRESPONDING TO LOCALIZED SURFACE PLASMON RESONANCE IN ORIENTATION PARALLEL TO c-AXIS (LSPR//) | 1.20 | 1030 | 922.35 | 33042.00 |
| | ABSORPTION CURVE CORRESPONDING TO POLARON ABSORPTION | 1.26 | 985 | 438.19 | 12265.60 |
| COMPARATIVE EXAMPLE 1 | ABSORPTION CURVE CORRESPONDING TO LOCALIZED SURFACE PLASMON RESONANCE IN ORIENTATION PERPENDICULAR TO c-AXIS (LSPR⊥) | 0.80 | 1550 | 2050.66 | 78843.30 |
| | ABSORPTION CURVE CORRESPONDING TO LOCALIZED SURFACE PLASMON RESONANCE IN ORIENTATION PARALLEL TO c-AXIS (LSPR//) | 1.00 | 1240 | 437.63 | 20209.67 |
| | ABSORPTION CURVE CORRESPONDING TO POLARON ABSORPTION | 1.40 | 885 | 1058.23 | 31174.01 |

[Table 3]

| | PROPORTION IN INTEGRATED INTENSITY OF MOLAR EXTINCTION COEFFICIENT CURVE (%) | | |
|---|---|---|---|
| | ABSORPTION CURVE CORRESPONDING TO LOCALIZED SURFACE PLASMON RESONANCE IN ORIENTATION PERPENDICULAR TO c-AXIS (LSPR⊥) | ABSORPTION CURVE CORRESPONDING TO LOCALIZED SURFACE PLASMON RESONANCE IN ORIENTATION PARALLEL TO c-AXIS (LSPR//) | ABSORPTION CURVE CORRESPONDING TO POLARON ABSORPTION |
| EXAMPLE 1 | 67.9 | 23.4 | 8.7 |

(continued)

| | PROPORTION IN INTEGRATED INTENSITY OF MOLAR EXTINCTION COEFFICIENT CURVE (%) | | |
|---|---|---|---|
| | ABSORPTION CURVE CORRESPONDING TO LOCALIZED SURFACE PLASMON RESONANCE IN ORIENTATION PERPENDICULAR TO c-AXIS (LSPR⊥) | ABSORPTION CURVE CORRESPONDING TO LOCALIZED SURFACE PLASMON RESONANCE IN ORIENTATION PARALLEL TO c-AXIS (LSPR//) | ABSORPTION CURVE CORRESPONDING TO POLARON ABSORPTION |
| COMPARATIVE EXAMPLE 1 | 60.6 | 15.5 | 23.9 |

As shown in FIG. 10A and Table 2, it can be confirmed that, for the complex tungsten oxide particles of Example 1, an absorption peak intensity (peak value) in the absorption curve of polaron absorption is lower than an absorption peak intensity in the absorption curve of localized surface plasmon resonance in the orientation parallel to the c-axis (LSPR∥).

Further, as shown in Table 3, in the integrated intensity of the molar extinction coefficient curve of the complex tungsten oxide particles of Example 1, the integrated intensity of the absorption curve of polaron absorption was 8.7%, whereas the integrated intensity of the absorption curve of localized surface plasmon resonance in the orientation parallel to the c-axis (LSPR∥) was 23.4%. Such light absorption properties are reflected in the optical profile in FIG. 9A and the transmittance in Table 1.

This application claims priority based on Japanese Patent Application No. 2023-170833 filed with the Japan Patent Office on September 29, 2023, the entire contents of which are incorporated herein by reference in this international application.

REFERENCE SIGNS LIST

- 10 Complex material producing apparatus
- 11 Storage
- 12 Two-fluid nozzle
- 13 Reaction tube
- 131 Pipe
- 14 Filter
- 15 Ejector
- 20 Reduction apparatus
- 21 Reaction tube
- 21A First end
- 21B Second end
- 22 Heater
- 23 Container
- 24 Complex tungsten oxide particles
- 30 Near-infrared ray absorbing particle dispersion liquid
- 31 Near-infrared ray absorbing particles
- 32 Liquid medium
- 40 Near-infrared ray absorbing particle dispersion
- 41 Near-infrared ray absorbing particles
- 42 Solid medium
- 50 Near-infrared ray absorbing laminate
- 51 Near-infrared ray absorbing particle dispersion
- 521 Transparent substrate
- 522 Transparent substrate
- 60 Near-infrared ray absorbing transparent substrate
- 61 Transparent substrate
- 61A One surface

62    Near-infrared ray absorbing layer

**Claims**

1.  Complex tungsten oxide particles comprising

    complex tungsten oxide, wherein
    the complex tungsten oxide is represented by a general formula $M_xW_yO_z$ where an element M is one or more elements selected from an alkali metal element, an alkaline earth metal element, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.20 \leq x/y \leq 0.37$; and $2.2 \leq z/y \leq 3.3$,
    a crystal system of the complex tungsten oxide particles is hexagonal, and
    in a molar extinction coefficient curve measured in a range of 0.5 eV to 2.0 eV for a dispersion liquid in which the complex tungsten oxide particles are dispersed in a liquid medium or for a dispersion in which the complex tungsten oxide particles are dispersed in a solid medium, a peak value of an absorption curve of polaron absorption is lower than a peak value of an absorption curve of localized surface plasmon absorption in an orientation parallel to a c-axis of complex tungsten oxide crystals contained in the complex tungsten oxide particles.

2.  The complex tungsten oxide particles according to claim 1, wherein
    an integrated intensity of the polaron absorption of the complex tungsten oxide crystals contained in the complex tungsten oxide particles is 20% or less relative to an integrated intensity of the molar extinction coefficient curve.

3.  The complex tungsten oxide particles according to claim 1, wherein
    an integrated intensity of the localized surface plasmon absorption in the orientation parallel to the c-axis of the complex tungsten oxide crystals contained in the complex tungsten oxide particles is 10% to 30% relative to an integrated intensity of the molar extinction coefficient curve.

4.  The complex tungsten oxide particles according to any one of claims 1 to 3, wherein
    the element M includes one or more elements selected from Rb and Cs.

5.  The complex tungsten oxide particles according to any one of claims 1 to 3, wherein
    an average particle diameter of the complex tungsten oxide particles is 10 nm to 200 nm.

6.  A near-infrared ray absorbing particle dispersion liquid, comprising:

    near-infrared ray absorbing particles; and
    a liquid medium, wherein
    the near-infrared ray absorbing particles are the complex tungsten oxide particles of any one of claims 1 to 3.

7.  A near-infrared ray absorbing particle dispersion, comprising:

    near-infrared ray absorbing particles; and
    a solid medium, wherein
    the near-infrared ray absorbing particles are the complex tungsten oxide particles of any one of claims 1 to 3.

# FIG.1

10

15

14

131

12

11

13

FIG.2

# FIG.3

30

31
32

# FIG.4

40

41
42

# FIG.5

50

522
51
521

# FIG.6

60

61A

62

61

# FIG.7A

200 nm

# FIG.7B

# FIG.7C

200 nm

# FIG.7D

# FIG.8

# FIG.9A

# FIG.9B

# FIG.10A

# FIG.10B

Legend:
- σ LSPR⊥c
- σ-LSPR//c
- σ-polaron
- calc.
- exp.

# FIG.11

Legend:
- EXAMPLE 1
- COMPARATIVE EXAMPLE 1

## INTERNATIONAL SEARCH REPORT

| International application No. |
|---|
| **PCT/JP2024/034548** |

**A. CLASSIFICATION OF SUBJECT MATTER**

*C01G 41/00*(2006.01)i; *C09C 1/00*(2006.01)i; *C09D 17/00*(2006.01)i; *C09K 3/00*(2006.01)i
FI: C01G41/00 A; C09C1/00; C09D17/00; C09K3/00 105

According to International Patent Classification (IPC) or to both national classification and IPC

**B. FIELDS SEARCHED**

Minimum documentation searched (classification system followed by classification symbols)

C01G41/00; C09C1/00; C09D17/00; C09K3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2010/0102700 A1 (JAISWAL, Abhishek) 29 April 2010 (2010-04-29) claims, paragraphs [0110]-[0112] | 1-7 |
| A | JP 2019-142730 A (SUMITOMO METAL MINING CO., LTD.) 29 August 2019 (2019-08-29) | 1-7 |
| A | JP 2017-105705 A (SUMITOMO METAL MINING CO., LTD.) 15 June 2017 (2017-06-15) | 1-7 |
| A | JP 2022-020365 A (SUMITOMO METAL MINING CO., LTD.) 01 February 2022 (2022-02-01) | 1-7 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2024** | **03 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/034548**

| Patent document cited in search report | | | Publication date (day/month/year) | Patent family member(s) | | | Publication date (day/month/year) |
|---|---|---|---|---|---|---|---|
| US | 2010/0102700 | A1 | 29 April 2010 | (Family: none) | | | |
| JP | 2019-142730 | A | 29 August 2019 | (Family: none) | | | |
| JP | 2017-105705 | A | 15 June 2017 | US | 2019/0225503 | A1 | |
| | | | | EP | 3388494 | A1 | |
| | | | | CN | 108811502 | A | |
| | | | | KR | 10-2018-0087404 | A | |
| JP | 2022-020365 | A | 01 February 2022 | (Family: none) | | | |

Form PCT/ISA/210 (patent family annex) (July 2022)

## REFERENCES CITED IN THE DESCRIPTION

**Patent documents cited in the description**

- WO 2005037932 A
- JP 2012532822 A
- WO 2017129516 A
- US 20100102700
- JP 2023170833 A

**Non-patent literature cited in the description**

- **TAKEDA HIROMITSU ; KENJI ADACHI**. Near infrared absorption of tungsten oxide nanoparticle dispersions.. *Journal of the American Ceramic Society*, 2007, vol. 90 (12), 4059-4061
- **GUO CHONGSHEN et al.** Novel synthesis of homogenous CsxWO3 nanorods with excellent NIR shielding properties by a water controlled-release solvothermal process.. *Journal of Materials Chemistry*, 2010, vol. 20 (38), 8227-8229
- **MAMAK MARC et al.** Thermal plasma synthesis of tungsten bronze nanoparticles for near infra-red absorption applications.. *Journal of Materials Chemistry*, 2010, vol. 20 (44), 9855-9857
- **HIRANO TOMOYUKI et al.** Synthesis of highly crystalline hexagonal cesium tungsten bronze nanoparticles by flame-assisted spray pyrolysis.. *Advanced Powder Technology*, 2018, vol. 29 (10), 2512-2520
- **NAKAKURA SHUHEI et al.** Improved photochromic stability in less deficient cesium tungsten bronze nanoparticles.. *Advanced Powder Technology*, 2020, vol. 31 (2), 702-707
- **MACHIDA K. ; OKADA M ; ADACHI K.** Excitations of free and localized electrons at nearby energies in reduced cesium tungsten bronze nanocrystals.. *J. Appl. Phys*, 2019, vol. 125 (10), 103103